Europäisches Patentamt

European Patent Office

Office européen des brevets

(19)

(11)     **EP 0 998 731 B1**

(12)     **FASCICULE DE BREVET EUROPEEN**

(45) Date de publication et mention
de la délivrance du brevet:
**12.09.2001   Bulletin 2001/37**

(21) Numéro de dépôt: **98934705.9**

(22) Date de dépôt: **23.07.1998**

(51) Int Cl.⁷: $G07F\ 7/08$, $G07F\ 19/00$

(86) Numéro de dépôt international:
**PCT/BE98/00115**

(87) Numéro de publication internationale:
**WO 99/05654 (04.02.1999 Gazette 1999/05)**

(54) **PROCEDE ET SYSTEME DE PAIEMENT PAR CHEQUE ELECTRONIQUE**

VERFAHREN UND SYSTEM ZUM BEZAHLEN MIT ELEKTRONISCHEM SCHECK

METHOD AND SYSTEM FOR PAYMENT BY ELECTRONIC CHEQUE

(84) Etats contractants désignés:
**AT BE CH CY DE DK ES FI FR GB GR IE IT LI LU
MC NL PT SE**

(30) Priorité:  **25.07.1997  BE 9700645**

(43) Date de publication de la demande:
**10.05.2000   Bulletin 2000/19**

(73) Titulaire: **PROTON WORLD INTERNATIONAL en
abrégé PWI**
**1130 Bruxelles (Haren) (BE)**

(72) Inventeurs:
• **MOULART, Yves**
**B-1190 Bruxelles (BE)**

• **DAEMEN, Joan**
**B-3400 Landen (BE)**
• **DAWIRS, Michel**
**B-1970 Wezembeek Oppem (BE)**

(74) Mandataire: **Claeys, Pierre et al**
**Gevers & Vander Haeghen,**
**Patent Attorneys,**
**Rue de Livourne 7**
**1060 Brussels (BE)**

(56) Documents cités:
**WO-A-91/16691          WO-A-96/36026
FR-A- 2 634 920          FR-A- 2 696 567
US-A- 5 434 919          US-A- 5 577 121**

Printed by Jouve, 75001 PARIS (FR)

**Description**

La présente invention concerne un procédé de paiement par chèque électronique, notamment dans le cas d'une transaction directe entre uniquement, d'une part, un émetteur de paiement muni d'un support comportant au moins un chèque électronique en blanc certifié par un organisme financier et un montant global utilisable au moins partiellement pour le chèque électronique et, d'autre part, un destinataire du paiement muni d'un dispositif adapté pour recevoir au moins un chèque électronique susdit du support précité.

De nombreux problèmes se posent dans la sécurisation de tels systèmes de paiements, notamment lorsqu'il est souhaité que ces paiements soient réalisés de manière dite "off-line", c'est-à-dire sans liaison avec l'ordinateur principal d'un organisme financier tel qu'une banque ou une société de gestion de paiements par carte à mémoire électronique et moyens de dialogue électronique.

Une pratique qui se répand actuellement est la mémorisation, dans une carte de paiements électronique, de chèques en blanc. Dans ce cas, il y a un besoin impératif de s'assurer que chaque chèque électronique ne peut servir qu'une fois, est certifié authentique par un organisme financier, ou mieux une autorité habilitée, et sera remboursé au destinataire du paiement par l'organisme financier de son choix.

A cet effet, il est utilisé des procédures de transport, échange et vérification de signatures entre ce que l'on a dénommé ci-dessus un support et un dispositif. Dans de telles procédures, il est estimé que trop d'éléments de sécurité à conserver secrets peuvent être violés par des tiers cherchant a utiliser par exemple plusieurs fois un même chèque, que ce soit au niveau de l'émetteur susdit du chèque ou du destinataire de celui-ci, que l'émetteur et le destinataire soient de connivence ou non, que l'un tente de voler l'autre ou un des organismes financiers, celui émettant le chèque électronique ou celui qui le paie au destinataire.

US-A-5 434 919 décrit un calcul de signatures à partir d'un tableau en appliquant à chaque ligne une fonction irréversible.

La présente invention a pour but de résoudre ces problèmes et de réaliser de tels paiements avec un contrôle de ceux-ci qui soit des plus infraudables dans un service "off-line", en organisant une interopérabilité entre lesdits support et dispositif.

Par interopérabilité, il faut entendre la possibilité de coopération sûre de paiement entre un support par exemple issu d'un organisme belge et un dispositif issu d'un organisme étranger et situé à l'étranger, ou encore issu d'un autre organisme belge et situé en Belgique, et dont la coopération sûre est possible sans que soient partagées une ou des clés secrètes entre les deux organismes et donc entre support et dispositif.

Il va de soi que la solution apportée à ces problèmes peut trouver également une application certaine dans, par exemple l'échange de données numériques enregistrées sur un support, de façon à s'assurer que celles-ci sont authentifiées par qui de droit, et non pas acquises frauduleusement, pour être fournies à un destinataire qui les acquiert de bonne foi ou ne pas être fournie à un destinataire qui n'y a pas droit.

Pour résoudre ces problèmes, le procédé de l'invention comprend, pour que le dispositif reconnaisse l'authenticité du support et d'un chèque en cours de réception,

- un calcul par le support d'un tableau, éventuellement partiel, à partir d'au moins un ensemble de k valeurs de base, en appliquant successivement à chacune d'elles n fois une fonction irréversible à paramètre(s) différant de préférence à chaque application, l'application successive de la fonction irréversible donnant n fois k valeurs intermédiaires,
- un calcul par le support d'une clé secrète à partir des k dernières valeurs intermédiaires d'ordre n et, à partir de cette clé, un calcul d'un signe distinctif du chèque,
- une transmission par le support au dispositif du signe distinctif calculé du chèque électronique,
- un engagement financier du support vis-à-vis du dispositif, en ce qui concerne le chèque, en fournissant au dispositif
- un premier résultat d'une fonction irréversible par laquelle a été traité le résultat d'un premier algorithme combinant une clé secrète de vérification, provenant de l'organisme financier émetteur du chèque électronique, et des paramètres dynamiques de ce chèque, et
- un second résultat d'un second algorithme combinant la clé secrète calculée du support, les paramètres dynamiques de ce chèque et le premier résultat ci-dessus,

    - au moins une supputation aléatoire/pseudo-aléatoire, par le dispositif (3), de k nombres m d'applications successives de la fonction irréversible aux k valeurs de base, les k nombres m étant compris entre zéro et n et pouvant être différents les uns des autres, la somme des k nombres m devant être une constante déterminée,
    - une transmission du résultat de la supputation par le dispositif au support,
    - une réponse du support à ladite supputation du dispositif, comprenant d'une part le résultat du premier algorithme combinant la clé secrète de vérification et les paramètres dynamiques du chèque et, d'autre part, un ensemble des k valeurs intermédiaires obtenues lors des applications successives de la fonction irréversible à chacune des k valeurs de base le ou les nombres de fois m compris entre zéro et n,
    - par le dispositif :

- des applications successives de la fonction irréversible à chacune des k valeurs intermédiaires d'ordre (s) m jusqu'à obtenir les k dernières valeurs intermédiaires d'ordre n,
- un calcul de ladite clé secrète à partir de ces k dernières valeurs intermédiaires d'ordre n et, à partir de cette clé secrète, un calcul du signe distinctif du chèque,
- une comparaison du signe distinctif ainsi calculé et du signe distinctif calculé par le support et reçu de celui-ci,
- une vérification par calcul et comparaison dans le dispositif dudit second résultat du second algorithme et de celui reçu du support,
- une vérification par calcul et comparaison dans le dispositif dudit premier résultat d'une fonction irréversible et de celui reçu du support et,
- si lesdites comparaison et vérifications donnent chacune une égalité, une acceptation et une mémorisation par le dispositif du chèque électronique émis par le support.

Ainsi on évite par exemple l'utilisation de cartes (ou supports) spéciales munies de circuits intégrés de cryptographie d'algorithmes à clé publique, par exemple RSA, connus dans le métier, mis au point par RSA Data Security Inc. Redwood City, Californie, USA ou de cartes fonctionnant avec une globalisation de clés DES (Data Encryption Standard = norme de chiffrement de données), ou un autre algorithme de chiffrement à clé secrète également connu dans le métier.

Avantageusement, la somme des k nombres m est une constante égale à n*k/2 si le produit n*k est pair ou, si ce produit est impair, à (n*k-1)/2.

Suivant une forme de réalisation de l'invention, le procédé comprend :

- une mémorisation dans le support d'au moins une formule de chèque électronique utilisable pour réaliser au moins un chèque susdit,
- une transmission par le support au dispositif de :

  - une série de h signes distinctifs de chèque, associés chacun à un ensemble distinct de k valeurs de base contenu dans le support,
  - un indice, compris entre 1 et h, pour désigner un signe distinctif particulier parmi les h signes distinctifs précités,
  - une signature numérique produite par l'organisme financier émetteur pour garantir lesdits signes distinctifs, et

- une utilisation par le dispositif, pour ladite comparaison, du signe distinctif particulier déterminé par l'indice en tant que signe distinctif reçu du support, et
- une vérification par le dispositif de ladite signature numérique au moyen d'une clé publique que connaît le dispositif.

Suivant un mode de réalisation, le procédé de l'invention comprend, pour la transaction, une transmission par le support au dispositif de données non secrètes qui peuvent être l'identification de l'organisme financier qui certifie le chèque électronique et, le cas échéant, la clé publique de l'organisme financier émetteur et un certificat de la clé publique précitée émis par une autorité de certification. Le dispositif peut vérifier dans ce cas l'authenticité dudit certificat au moyen d'une autre clé publique, que le dispositif connaît, de l'autorité de certification.

Suivant une forme de réalisation particulière de l'invention, le support peut être rechargé, au moins en ce qui concerne son montant global et/ou son nombre de chèques électroniques, au cours d'une liaison avec l'organisme financier précité ou un de ses délégués.

Selon un mode de réalisation de l'invention, le procédé comporte, pour le calcul du tableau par le support, une valeur de base mère commune à chaque colonne du tableau, et une application à cette valeur de base mère d'au moins une fonction irréversible de préférence à paramètre(s) différent(s) pour chaque colonne pour obtenir lesdites k valeurs de base.

Suivant une forme de réalisation avantageuse de l'invention, au cours d'un rechargement du support, il lui est fourni en outre une identification de formules de chèque, des paramètres statiques précités mis à jour, une série de h signes distinctifs, une signature numérique précitée et un nombre déterminé de valeurs de base ou, le cas échéant, d'au moins une valeur de base commune susdites.

Suivant une autre forme de réalisation avantageuse de l'invention, le dispositif enregistre en cours de transaction le résultat du premier algorithme et/ou, le cas échéant, une identification de l'organisme financier susdit et/ou une identification de la formule du chèque électronique reçu et/ou l'identification du support.

Suivant une forme de réalisation particulièrement avantageuse de l'invention, le procédé prévoit

- que pour des paiements incrémentiels du genre par carte de téléphone, les paramètres dynamiques des chèques comportent de plus :
- le montant ou la suite des montants correspondant aux paiements incrémentiels autorisés,
- une valeur d'enchaînement de base,
- un enchaînement de valeurs d'enchaînement successives qui découlent chacune successivement de l'application d'une fonction irréversible à la valeur d'enchaînement immédiatement suivante, et
- qu'après avoir effectué avec le dispositif ci-dessus un protocole de paiement par chèque électronique, le support peut effectuer un paiement incrémentiel en fournissant au dispositif de réception des valeurs d'enchaînement successives, le dispositif conservant un enregistrement de la dernière valeur d'enchaînement reçue et de l'indice correspondant.

Suivant une autre forme de réalisation particulièrement avantageuse de l'invention, le procédé comporte une annulation d'une transaction de paiement par chèque du support au dispositif. A cet effet, le procédé peut comporter, d'une part, une mémorisation, dans le dispositif, d'au moins une formule de chèque électronique, émise par l'organisme financier du dispositif, et de données secrètes relatives à cette formule et, d'autre part, une programmation du support de manière à ce que celui-ci ne puisse recevoir un paiement par chèque que du dispositif auquel une transaction a été payée précédemment au moyen dudit support, ce dernier mémorisant le chèque de paiement d'annulation jusqu'à ce que le support soit présenté à son organisme financier correspondant, notamment pour un rechargement du support.

De préférence, le procédé de l'invention comporte de plus des étapes d'authentification inverse par lesquelles le support peut reconnaître de son côté l'authenticité du dispositif. A cet effet, les étapes d'authentification inverse peuvent être du même genre que celles pour l'authentification du support, tout en ne nécessitant, le cas échéant, qu'un seul signe distinctif de formule de chèque électronique.

Suivant une autre préférence, le procédé de l'invention peut comporter, pour au moins une partie des étapes d'authentification inverse, l'utilisation d'un élément de communication entre le support et le dispositif, cet élément de communication étant de préférence détenu par l'émetteur de paiement qui détient ledit support.

Pour augmenter le nombre de fois qu'une même formule de chèque peut servir à faire un chèque distinct, le procédé comporte, dans le support une combinaison de chacun des divers signes distinctifs, à un premier niveau, au moyen de fonctions irréversibles avec chaque fois une autre valeur ou un autre signe distinctif; les résultats de chaque fois deux applications de la fonction irréversible sont ensuite combinés à un second niveau par une autre application de la fonction irréversible pour donner de nouveaux résultats à combiner à un troisième niveau par une ou d'autres applications de la fonction irréversible et ainsi de suite jusqu'à obtenir un résultat unique qui est signé, comme signe distinctif déduit, pour la signature numérique pour signer les chèques émis.

Alors, pour une vérification par le dispositif du signe distinctif déduit, le procédé peut comporter une transmission, depuis le support, de chaque fois le second signe distinctif utilisé dans une première combinaison au premier niveau et, à chaque niveau suivant, du résultat intermédiaire des fonctions irréversibles utilisé pour être combiné successivement au résultat intermédiaire correspondant obtenu à partir du second signe distinctif, jusqu'à l'obtention du signe distinctif déduit.

L'invention concerne également un système de paiement pour la mise en oeuvre du procédé ci-dessus. A cet effet, le système de l'invention comprend

- au moins un support muni

  - de moyens pour la mémorisation d'au moins

    - un chèque électronique en blanc certifié par un organisme financier,
    - un montant global utilisable au moins partiellement pour le chèque électronique,
    - au moins un signe distinctif de ce chèque, qui peut être inclus dans ce dernier,
    - au moins un ensemble de k valeurs de base qui peuvent être déduites d'une seule valeur mère commune,
    - une clé secrète de vérification provenant de l'organisme financier émetteur du chèque électronique, et
    - des paramètres dynamiques dudit chèque, et

  - de moyens de calcul

    - d'un tableau à partir des k valeurs de base, en appliquant successivement à chacune d'elles n fois une fonction irréversible à paramètre(s) différant de préférence à chaque application, l'application successive de la fonction irréversible donnant n fois k valeurs intermédiaires,
    - d'une clé secrète à partir des k dernières valeurs intermédiaires d'ordre n et, à partir de cette clé, d'un signe distinctif du chèque,
    - d'un premier résultat d'une fonction irréversible par laquelle a été traité le résultat d'un premier algorithme combinant la clé secrète de vérification et des paramètres dynamiques du chèque, et
    - d'un second résultat d'un second algorithme combinant la clé secrète calculée du support et les paramètres dynamiques de ce chèque et du premier résultat susdit, et
    - de moyens de dialogue direct avec au moins un dispositif adapté pour recevoir au moins un chèque électronique susdit du support précité et entre autre le signe distinctif dudit chèque,

  - le dispositif étant équipé

    - de moyens de supputation aléatoire/pseudo-aléatoire de k nombres m d'applications successives de la fonction irréversible aux k valeurs de base, les k nombres n'étant compris entre zéro et n et pouvant être différents les uns des autres, la somme des k nombres m devant être une constante déterminée,

- de moyens de dialogue direct correspondant à ceux du support, pour réaliser entre autre une transmission du résultat de la supputation au support,
- de moyens de calcul
- appliquant successivement la fonction irréversible à chacune des k valeurs intermédiaires d'ordre m jusqu'à obtenir les k dernières valeurs intermédiaires d'ordre n,
- de ladite clé secrète à partir de ces k dernières valeurs intermédiaires d'ordre n et, à partir de cette clé, du signe distinctif du chèque,
- des moyens de comparaison du signe distinctif ainsi calculé et du signe distinctif calculé par le support et reçu de celui-ci,
- des moyens de vérification par calcul et comparaison dudit second résultat du second algorithme et de celui reçu du support,
- des moyens de vérification par calcul et comparaison dudit premier résultat d'une fonction irréversible et de celui reçu du support et,
- des moyens de mémorisation d'au moins le chèque électronique émis par le support, si lesdites comparaison et vérifications donnent chacune une égalité.

Suivant une forme de réalisation du système de l'invention,

- les moyens de mémorisation du support sont agencés pour mémoriser au moins une formule de chèque électronique utilisable pour réaliser au moins un chèque susdit,
- les moyens de dialogue du support sont agencés pour transmettre au dispositif :une série de h signes distinctifs de chèque, associés chacun à un ensemble distinct de k valeurs de base contenu dans le support, un indice, compris entre 1 et h, pour désigner un signe distinctif particulier parmi les h signes distinctifs précités, et une signature numérique produite par l'organisme financier émetteur pour garantir lesdits signes distinctifs, et
- le dispositif est agencé de façon à utiliser, pour ladite comparaison, le signe distinctif particulier déterminé par l'indice en tant que signe distinctif reçu du support, et
- le dispositif comporte des moyens de calcul agencés pour vérifier ladite signature numérique au moyen d'une clé publique que connaît le dispositif.

Suivant une autre forme de réalisation du système de l'invention, les moyens de dialogue du support sont agencés pour transmettre au dispositif des données non secrètes qui peuvent être l'identification de l'organisme financier qui certifie le chèque électronique et, le cas échéant, la clé publique de l'organisme financier émetteur et un certificat de cette clé publique émis par une autorité de certification. Alors, le dispositif peut être agencé pour vérifier l'authenticité dudit certificat au moyen d'une autre clé publique, que le dispositif connaît, de l'autorité de certification.

Avantageusement, le système suivant l'invention comporte comme support une carte de paiement du type à circuit intégré et comme dispositif un terminal de paiement à lecture et écriture pour une carte de ce type.

En variante, le système suivant l'invention comporte comme support une carte de paiement du type à circuit intégré et comme dispositif un terminal de paiement à lecture et écriture pour une carte de ce type et muni de moyens de transfert de données reçues de ladite carte, et/ou traitées par le terminal, dans des moyens de mémorisation détachables du terminal proprement dit et notamment transportables jusqu'à un organisme financier pour y effectuer un transfert desdites données.

Selon une autre variante du système suivant l'invention, notamment au cas où le dispositif est à distance de l'émetteur du paiement et/ou dans le cas d'étapes d'authentification inverse du dispositif par le support, le support précité se compose entre autres, d'une part, de la carte à circuit intégré susdite et, d'autre part, d'un élément de communication, pour le dialogue entre celle-ci et ledit dispositif.

D'autres détails et particularités de l'invention ressortiront des revendications secondaires et de la description des dessins qui sont annexés au présent mémoire et qui illustrent, à titre d'exemple non limitatifs, le procédé de l'invention et un système particulier de l'invention pour la mise en oeuvre du procédé.

La figure 1 montre schématiquement une forme de réalisation d'un système permettant la mise en oeuvre d'un mode de réalisation du procédé de paiement.

La figure 2 montre schématiquement des étapes de constitution d'un tableau de valeurs permettant de vérifier et/ou calculer un signe distinctif de chèque.

La figure 3 montre schématiquement des étapes de constitution de valeurs permettant de calculer un autre type de signe distinctif de chèque.

La figure 4 montre schématiquement une variante du système dans laquelle le dispositif est constitué d'au moins deux éléments détachables l'un de l'autre.

La figure 5 montre schématiquement une autre variante du système dans laquelle le support est constitué d'au moins deux éléments détachables l'un de l'autre.

La figure 6 montre schématiquement un système de l'invention intégré dans un circuit simple de paiement via des banques.

Dans les différentes figures, les mêmes notations de référence désignent des éléments identiques ou analogues.

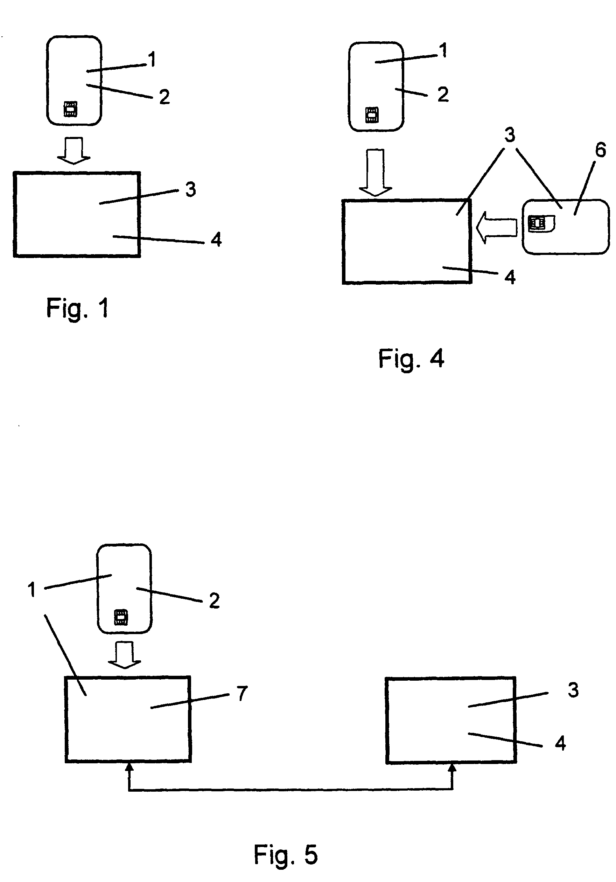

Le procédé de l'invention est particulièrement destiné à réaliser un protocole de paiement par chèque électronique dans ce que l'on appelle, comme expliqué ci-dessus, une situation dite "off-line". Ce protocole de paiement met en oeuvre une interopérabilité entre (figure 1) un support 1 susdit de chèque électronique, qui peut être une carte 2 du genre carte de banque, carte de crédit, carte de débit, etc., à circuit intégré de mémorisation et de calcul et un dispositif 3 de réception de chèque électronique qui peut être un terminal 4 à lecture et écriture pour ladite carte 2 à circuit intégré.

Un but de la présente invention consiste en ce que la carte 2 et le terminal 4 soient agencés pour exécuter une authentification du chèque électronique que doit transmettre la carte 2, par exemple d'un acheteur, au terminal 4, par exemple d'un commerçant à qui l'acheteur doit payer un achat, sur base d'au moins une supputation aléatoire/pseudo-aléatoire de la part du terminal 4 et d'une réponse correspondante de la carte 2.

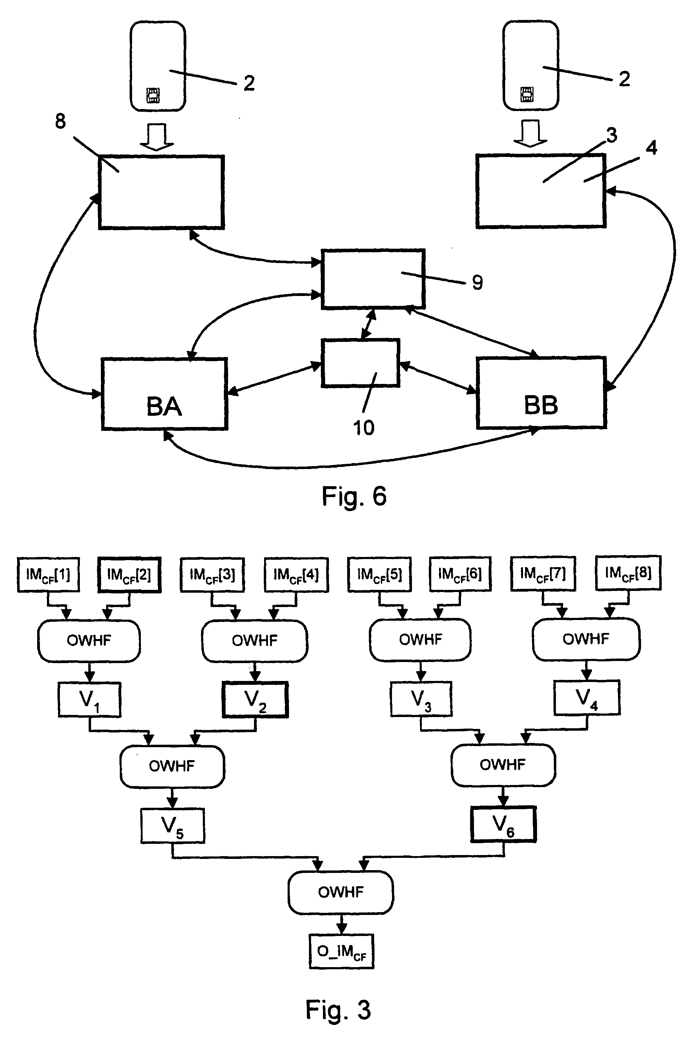

Pour ce faire, la carte 2 et le terminal 4 n'ont en mémoire, comme éléments connus en commun par chacun d'eux, que des fonctions et/ou algorithmes irréversibles ainsi qu'un algorithme MAC expliqué ci-dessous. Outre cela, la carte 2 comporte en mémoire une clé publique $PK_B$ d'un organisme financier, tel que la banque BA (figure 6) du détenteur de la carte 2, et un certificat de clé publique $CERT_B$ signé électroniquement par une autorité de certification de cette clé publique $PK_B$ de la banque BA. De son côté, le terminal 4 possède en mémoire une clé publique $PK_{CA}$ qui peut être certifiée par la même autorité de certification. Dans la présente invention, il n'y a avantageusement pas de nécessité que la carte 2 ait la capacité de calculer des algorithmes de clé publique, sauf cas spéciaux.

Le protocole décrit ci-dessous correspond à une situation dans laquelle :

- un acheteur souhaite payer un achat à un commerçant en utilisant un chèque électronique,
- l'acheteur détient à cet effet une carte 2 à circuit intégré (un support 1 de chèque électronique) fournie par sa banque BA,
- le commerçant détient à cet effet un terminal 4 (dispositif 3 de réception de chèque électronique) fourni par sa banque BB à lui, et
- le paiement électronique est réalisé sans qu'il n'y ait une liaison établie avec l'une BA ou l'autre BB des deux banques considérées ou tout autre organisme financier ou de contrôle.

A la base du procédé, il est admis que l'acheteur ou détenteur de la carte 2 fait confiance à sa banque BA qui charge sa carte 2.

La sécurisation recherchée et obtenue par l'invention consiste en ce que :

- la banque BA de l'acheteur doit être sûre qu'elle n'aura à payer que des chèques électroniques vrais émis par la carte 2 de l'acheteur, donc pas de chèques frauduleusement dédoublés ou altérés par l'acheteur ou un tiers ni de chèques frauduleusement réalisés par le commerçant,
- le commerçant souhaite être sûr que sa banque BB acceptera de lui créditer la chèque électronique reçu de l'acheteur,
- la banque BB du commerçant souhaite être sûre qu'un chèque accepté en paiement par le commerçant sera accepté sans problème ultérieurement par la banque BA de l'acheteur.

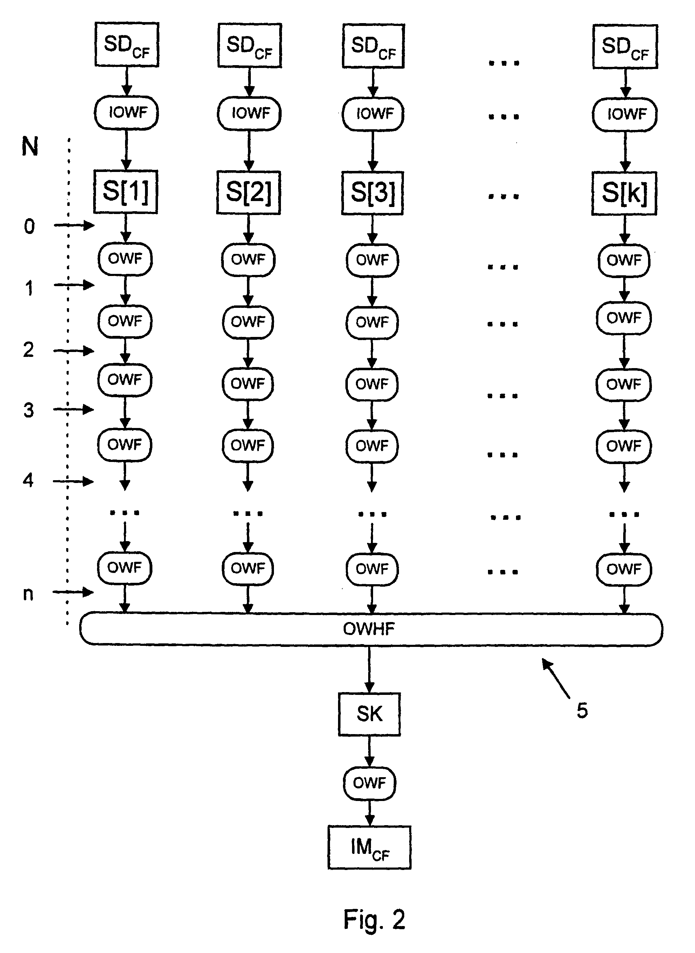

Le protocole de paiement par chèque électronique, suivant l'invention, utilise les fonctions cryptographiques suivantes (figure 2), connues de l'homme de métier :

- une vérification de signature de clé publique (par un algorithme RSA à petit exposant public, RSA étant les initiales des inventeurs Rivest, Shamir et Adleman de cet algorithme),
- un algorithme MAC combinant une clé et des données, MAC signifiant "Message Authentication Code" ou code d'authentification de messages (cet algorithme étant basé sur ce que l'on appelle en cryptographie un "Triple DES" ou "Triple Data Encryption Standard", c'est-à-dire un système de chiffrement de données en appliquant trois fois l'algorithme DES,
- une première fonction irréversible paramétrée, désignée présentement par OWF (One Way Function = fonction à un seul sens ou irréversible), combinant des données et des paramètres,
- une seconde fonction irréversible paramétrée, désignée présentement par SOWF, combinant des données et des paramètres, et
- une fonction irréversible de compression, désignée présentement par OWHF (One Way Hash Function), combinant également des paramètres et des données.

Ces fonctions peuvent être mises en oeuvre par des moyens de calcul contenus dans le circuit intégré du support 1 ou carte 2. A l'endroit de la carte 2, la présente invention évite la nécessité de produire une signature en utilisant un algorithme à clé publique.

Le support 1 ou carte 2 contient, dans une mémoire comprise dans son circuit intégré, au moins une formule CF non secrète de chèque électronique comprenant des indications concernant cette formule CF, comme par exemple :

- $ID_{CF}$ : une identification de la formule CF,
- $ID_C$ : une identification de la carte 2,
- $SP_{CF}$ : des paramètres dits statiques, associés à la formule, comme par exemple une date d'expiration de validité et un montant autorisé de transaction maximum,

- $IM_{CF}[1...h]$ : une série de h signes distinctifs,
- $SIGN_{CF}$ : une signature numérique fournie par la banque BA pour authentifier $ID_{CF}$, $SP_{CF}$ et $IM_{CF}[1...h]$.

Le support 1 ou carte 2, selon le cas d'espèce, peut contenir dans sa mémoire des informations non secrètes au sujet de sa banque BA qui a émis le ou les chèques électroniques contenus dans la carte 2, telles que :

- $ID_B$ : une identification de la banque,
- $PK_B$ : la clé publique de la banque,
- $CERT_B$ : un certificat de clé publique signé par l'autorité de certification qui authentifie ainsi $ID_B$ et $PK_B$,
- en variante, une date d'expiration du certificat $CERT_B$.

Par formule de chèque (électronique), il faut comprendre ici un document (électronique) à compléter par des données (paramètres dynamiques) pour qu'il devienne un chèque (électronique) unique.

La carte 2 peut encore contenir au moins un ensemble de valeurs de base S[1],...[k], associées à un ou chaque signe distinctif $IM_{CF}[i]$, i étant compris entre zéro et h, et une clé secrète SVK associée à la formule de chèque CF en vue d'une vérification par la banque BA du chèque tracé au moyen de cette formule de chèque. On peut ainsi considérer que ce que l'on appelle ci-dessus une chèque en blanc est en fait une formule de chèque non complétée ou partiellement complétée.

Si la combinaison de signatures utilisée permet de récupérer des données, une partie des données signées seront de préférence intégrées dans ces signatures elles-mêmes, comme cela est connu dans le métier.

Comme le montre la figure 2, un signe distinctif particulier $IM_{CF}$ dépend des valeurs de base S[1],...S[k], ou même d'une valeur de base commune ou mère $SD_{CF}$ dénommée SEED en anglais (= semence) qui, par application d'une fonction irréversible SOWF, donne ces différentes valeurs de base S[1],...S[k].

Les fonctions irréversibles OWF, SOWF et OWHF appliquées dans le cas de la figure 2 ont chaque fois au moins un paramètre dont la valeur est différente de l'une à l'autre application dans le tableau 5. Ce paramètre différent peut être le paramètre de la rangée ou niveau N (1 à n) et/ou celui de la colonne (1 à k) et/ou celui de l'indice i de $IM_{CF}[i]$, et/ou $ID_{CF}$ et/ou $ID_B$ selon le cas d'espèce.

Les fonctions irréversibles OWF, SOWF et OWHF utilisées selon la figure 2 sont de plus choisies de façon à ce que, connaissant leurs résultats respectifs, il ne soit pas possible de trouver les données d'entrée correspondantes ou, si on connaît les données d'entrée, de trouver des données d'entrée différentes de celles précitées et qui donnent le même résultat.

On peut choisir lesdites fonctions irréversibles comme suit :

- les fonctions OWF peuvent être mises en oeuvre avec un chiffrement de bloc d'une dimension de bloc et clé de 64 ou 80 bits,
- les fonctions SOWF peuvent être mises en oeuvre avec un chiffrement de bloc d'une dimension de bloc et clé de 128 ou 160 bits. Les résultats obtenus sont tronqués à 64 ou 80 bits respectivement,
- la fonction OWHF peut être mise en oeuvre sous la forme d'une fonction de compression (hash function) connue dans le métier (par exemple la fonction dénommée SHA-I).

Un protocole de base de paiement par chèque électronique suivant l'invention peut comporter des étapes ci-après.

Lorsque l'acheteur prépare son chèque électronique, il complète une formule de chèque CF par des paramètres dits dynamiques CDP de ce chèque, à savoir par exemple :

- la date et l'heure du paiement,
- le montant et la devise choisie (en fonction entre autre du pays où se fait la transaction du chèque), et
- de préférence une identification $ID_D$ du destinataire du chèque (le commerçant ou le dispositif 3).
   La gestion de ces paramètres dynamiques par le support 1 et par le dispositif 3 ne fait pas partie de la présente invention mais est connue dans le métier.

Le support 1 ou carte 2, introduit par exemple dans un lecteur de carte du dispositif 3, envoie à ce dernier différents paramètres parmi ceux cités ci-dessus, de préférence :

- $ID_B$ l'identification de la banque émettrice BA,
- $ID_C$ : l'identification du support 1
- $PK_B$ : la clé publique de cette banque BA,
- $CERT_B$ : le certificat de ces deux paramètres,
- $ID_{CF}$ : l'identification de la formule de chèque CF,
- $SP_{CF}$ : des paramètres statiques précités de cette formule de chèque électronique,
- $IM_{CF}[1...h]$ : une série de h signes distinctifs susdits,
- $SIGN_{CF}$ : une signature numérique de la banque BA,
- i : l'indice indiquant quel signe distinctif $IM_{CF}[i]$ de la série de h signes est utilisé.

Le dispositif 3 vérifie :

- $CERT_B$ en utilisant la clé publique certifiée $PK_{CA}$, et ensuite

- SIGN$_{CF}$ en utilisant la clé publique PK$_B$ de la banque BA.

A ce moment de la vérification cependant, le dispositif 3 n'a pas de preuve suffisante qu'il est vraiment en communication avec un support 1, non fraudé, tel que délivré par la banque émettrice BA. Les informations reçues du support 1 par le dispositif 3 à ce moment pourraient être une copie frauduleuse.

Le procédé de l'invention prévoit qu'à ce stade le support 1 prend un engagement (= "commitment" en anglais) vis-à-vis du dispositif 3 :

- le support 1 calcule un code d'authentification AC_I en vue d'une vérification ultérieure par la banque émettrice BA, par un algorithme MAC combinant des paramètres dynamiques CDP susdits et la clé secrète de vérification SVK :

$$AC\_I = MAC\ (SVK,\ CDP),$$

- le support 1 calcule à partir de cela, à l'aide d'une fonction irréversible OWF, une valeur d'engagement O_AC_I à utiliser dans le protocole de paiement par chèque :

$$O\_AC\_I = OWF\ (AC\_I),$$

- le support 1 calcule un code d'authentification AC_C, par un algorithme MAC, sur base de la clé secrète SK, des paramètres dynamiques CDP et de la valeur d'engagement O_AC_I :

$$AC\_C = MAC\ (SK,\ CDP \blacklozenge O\_AC\_I),$$

♦ : signifie ici un enchaînement de données,
- le support 1 envoie au dispositif 3 les résultats O_AC_I et AC_C.

A ce stade du protocole, le dispositif 3 n'a encore aucun moyen pour vérifier les codes d'authentification AC_C. En fait, le dispositif 3 n'a pas encore de garantie d'être en liaison avec un support 1 d'origine certifiée.

Comme étape suivante, le dispositif 3 fait au moins une supputation aléatoire/pseudo-aléatoire (en anglais "challenge") aux fins de vérifier que c'est réellement le support 1 authentique qui est en liaison pour le paiement du chèque.

La supputation aléatoire/pseudo-aléatoire consiste à donner pour chacune des k colonnes de la figure 2 un ordre ou niveau N entre zéro et n, c'est-à-dire donc une série de k nombres m plus petits que n+1. De préférence, la somme des k nombres m (généralement différents les uns des autres) de la supputation est égale à n*k/2 si n*k est un produit pair ou, si ce dernier est impair, égale à (n*k-1)/2. La manière de faire cette supputation aléatoire/pseudo-aléatoire ne fait pas partie de l'invention, elle est connue de l'homme du métier. Qu'il soit simplement dit qu'elle est faite de façon uniforme et imprévisible dans l'ensemble de possibles supputations de ce genre.

Le dispositif 3 transmet à ce moment sa supputation aléatoire/pseudo-aléatoire au support 1 et celui-ci répond en communiquant au dispositif 3 le code d'authentification AC_I calculé et un ensemble de k valeurs qui sont pour chaque colonne 1 à k de la figure 2 la valeur intermédiaire d'ordre ou niveau m indiqué dans la supputation faite par le dispositif 3.

Le dispositif 3 vérifie à son tour la réponse du support 1 et, à cet effet, il calcule à partir des k valeurs intermédiaires de niveaux m reçues, en appliquant un nombre de fois approprié les fonctions irréversibles OWF de la figure 2 le résultat à utiliser pour calculer au moyen de la fonction irréversible OWHF la clé SK. Le dispositif 3 calcule alors à partir de cette dernière le signe distinctif IM$_{CF}$ = OWF(SK) et vérifie s'il correspond ou non à la valeur IM$_{CF}$[i] utilisée pour vérifier le chèque électronique reçu. Ensuite, le dispositif 3 vérifie le code d'authentification AC_C en utilisant la clé SK et vérifie la valeur d'engagement financier O_AC_I du support 1 en appliquant la fonction irréversible adéquate :

$$O\_AC\_I = OWF(AC\_I).$$

Si toutes les vérifications et comparaisons sont positives, le dispositif 3 accepte le paiement par le chèque électronique et en mémorise la "trace" dans une zone protégée de sa mémoire. Cette trace comprend :

- ID$_B$ : l'identification de la banque émettrice BA
- ID$_{CF}$ : l'identification de la formule de chèque,
- éventuellement ID$_C$ : l'identification du support 1 ou carte 2,
- AC_I : le code d'authentification de CDP.

Après le protocole de paiement par chèque électronique, la valeur IM$_{CF}$[i] est considérée utilisée.

Dans le procédé de l'invention, le nombre de paiements qui peuvent être réalisés avec une même formule de chèque est de h.

Il apparaît que la clé secrète SK utilisée pour authentifier les paramètres dynamiques CDP n'est communiquée qu'au moment où a lieu l'échange de la supputation du dispositif 3 et de la réponse du support 1. A partir de ce moment, la clé secrète doit être considérée comme étant devenue une information publique.

Le nombre de supputations possibles que peut entreprendre le dispositif 3 dépend des valeurs exactes de k et n et peut être aisément calculé. On peut choisir par exemple n et k de manière à ce que ce nombre de supputations soit de l'ordre de $4*10^{10}$, etc.

On comprendra que la réponse à une seule supputation ne permet pas d'en déduire une réponse à une quelconque autre supputation puisqu'il il y aura au moins une colonne (figure 2) pour laquelle une valeur intermédiaire d'un niveau inférieur est requise.

Un chargement ou rechargement du support 1 en formule de chèque et montant ou valeur monétaire doit être exécuté de manière sûre et est réalisé donc en ligne directe ("on-line") avec l'organisme financier ou banque émettrice BA ou avec toute autre tierce partie autorisée.

Comme une formule de chèque électronique CF ne peut être utilisée qu'un nombre déterminé de fois pour ne réaliser chaque fois qu'un chèque unique et authentifiable, chaque formule de chèque électronique est produite par l'organisme financier émetteur BA et doit être chargée à l'avance dans le support 1.

Les données à transmettre au support 1 lors du chargement d'une formule de chèque sont par exemple :

- $ID_{CF}$ : l'identification de la formule chèque électronique,
- $SP_{CF}$ : les paramètres statiques de cette formule,
- $IM_{CF}[1...h]$ : une série de h signes distinctifs de chèques,
- $SIGN_{CF}$ : une signature numérique de la banque émettrice BA sur les données ci-dessus $ID_{CF}$, $SP_{CF}$, $IM_{CF}[1...h]$ qui peuvent être incluses dans cette signature,
- dans une variante énoncée ci-dessus, une valeur mère ou de base commune $SD_{CF}$ qui est utilisable par le support pour calculer les valeurs de base S[1...k] précitées et ensuite les valeurs intermédiaires de la figure 2, jusqu'à chaque signe distinctif $IM_{CF}[i]$.

La valeur mère ou de base commune $SD_{CF}$ est transmise par l'organisme émetteur BA au support 1 d'une manière chiffrée. Pour établir une communication sûre entre cet organisme BA et le support 1, on peut utiliser un simple algorithme MAC et un chiffrement en utilisant des clés déduites du côté du support 1 et des clés principales dans l'ordinateur principal de l'organisme BA. L'homme de métier connaît cela.

Les signes distinctifs $IM_{CF}[1...h]$ du chèque électronique dépendent de la valeur mère ou de base commune $SD_{CF}$ et doivent en conséquence être calculés par l'organisme financier BA. Ceci peut être fait à l'avance. Au moment du chargement d'un support 1, les signes $IM_{CF}[1...h]$ peuvent être repris d'une banque de données de l'ordinateur principal.

Il faut absolument veiller à ce qu'aucun des signes distinctifs $IM_{CF}[1...h]$ ne soit utilisé plus qu'une fois et à ce que les valeurs mères $SD_{CF}$ correspondantes soient mémorisées sous une forme chiffrée.

La déduction, à partir de la valeur mère $SD_{CF}$ ou à partir des valeurs de base S[1...k], des valeurs intermédiaires de niveau zéro à la figure 2 n'intervient pas dans le protocole proprement dit de paiement par chèque électronique. Donc le choix de la fonction irréversible SOWF peut être laissé à la banque émettrice BA.

Lorsque le dispositif 3 ou terminal 4 (figure 6) est mis en communication avec son propre organisme financier BB, il transmet à ce dernier les "traces" du chèque électronique reçu, comprenant de préférence l'identification $ID_D$ du dispositif 3. L'organisme financier BB trie ces traces et réalise par exemple une compensation du chèque électronique avec l'organisme financier BA du support 1. A cet effet, l'organisme financier BB transmet à l'organisme financier BA ladite trace pour une vérification de la transaction de paiement, par chèque électronique décrite ci-dessus et en reçoit un accusé de réception.

En variante, le support 1 peut être agencé pour permettre des paiements dits incrémentiels (tick payments) dans le cas desquels le support 1 contient également en mémoire un montant supplémentaire ou le montant précité prévu pour des chèques tandis qu'un dispositif 3 adapté prélève de petites sommes successives comme dans un cas de téléphone public à payer par carte adéquate. Par petite somme, on entend ici un montant beaucoup plus petit que celui prévu pour un chèque électronique. A cet effet, le protocole ci-dessus est aménagé en ajoutant aux paramètres dynamiques CDP précités les paramètres suivants :

- la ou les sommes correspondant à des prélèvements, et
- une valeur d'enchaînement $Z_0$ de base, à utiliser pour la partie "prélèvement" du protocole aménagé.

Une chaîne de valeurs $Z_j$ d'enchaînement est déterminée par une fonction irréversible appliquée à la valeur $Z_{j+1}$ suivante :

$$Z_j = OWF(Z_{j+1}).$$

Lors d'un prélèvement, le support 1 fournit des valeurs $Z_1$, $Z_2$, $Z_3$ correspondant à chaque petite somme. Le dispositif 3 adapté conserve alors une trace de la dernière valeur $Z_j$ et de son indice j reçus à l'occasion de ce paiement.

Un nombre maximum de prélèvements de petites sommes doit être fixé à l'avance. A cet effet, on peut prévoir un algorithme nécessitant peu de mémoire et de matériel de calcul.

Le protocole de transaction ci-dessus peut également être aménagé pour exécuter un paiement par chèque électronique en sens inverse, donc du dispositif 3 ou terminal 4 vers le support 1 ou carte 2. A cet effet, le dispositif 3 doit contenir un chèque électronique émis par son organisme financier BB et un type de moyens de sécurité contenant des éléments secrets de ce chèque. Le support 1 peut être programmé de son côté pour n'accepter des paiements par chèque que d'un dispositif 3 qu'il a lui-même payé précédemment par chèque lors, par exemple d'une transaction d'achat d'un objet. Ainsi peut être réglé une annulation ou un remboursement d'un achat. Un paiement en sens inverse ne nécessite pas en principe une authentification du dispositif 3, entre autre lors d'un remboursement d'un achat, l'acheteur étant supposé connaître et faire confiance au commerçant.

Généralement, pour ne pas compliquer le support 1, celui-ci ne fera que conserver telle quelle la trace de ce paiement en sens inverse en vue d'une présentation de ce chèque à l'organisme financier BA émetteur du support 1, lors d'un rechargement ultérieur de celui-ci. Cet organisme financier BA peut cependant décider d'ajouter, directement après le paiement ou uniquement lors d'une de ses mises en communication avec le support 1, la valeur de ce chèque de remboursement au montant enregistré dans le support 1.

Le protocole ou procédé décrit jusqu'à présent ne prévoit pas d'authentification inversée du dispositif 3 vis-à-vis du support 1 et/ou de l'organisme financier BA de celui-ci.

Une telle authentification inversée peut cependant être mise en oeuvre en utilisant le même jeu de supputation et de réponse, en ne prévoyant à cet effet qu'un signe distinctif $IM_{CF}$. Ceci peut s'avérer utile par exemple dans le cas de paiements via un réseau de communication tel qu'INTERNET.

Dans le protocole présenté jusqu'à présent, le nombre de paiements qui peuvent être faits avec une seule formule de chèque en blanc est de h (nombre de signes distinctifs $IM_{CF}[i]$ donnés par l'organisme BA et à joindre à une formule de chèque pour former un chèque particulier unique).

Suivant une variante de l'invention, ce nombre de paiements avec une seule formule de chèque peut être augmenté en utilisant par exemple la combinaison de la figure 3. Dans cette combinaison, chacune des diverses valeurs $IM_{CF}[i]$ est combinée, à un premier niveau, au moyen de fonctions irréversibles OWHF à chaque fois une autre valeur qui peut être également un signe distinctif $IM_{CF}[i']$. Les résultats $V_1$ et $V_2$ d'une part et $V_3$ et $V_4$ d'autre part de chaque fois deux applications de la fonction irréversible OWHF sont combinés par une autre application de la fonction irréversible OWHF pour donner deux nouveaux résultats $V_5$ et $V_6$ à combiner par une ou d'autres applications de la fonction irréversible jusqu'à obtenir un résultat unique $O\_IM_{CF}$ qui est à présent utilisé comme signe distinctif déduit pour la signature de chèques.

Pour permettre que, dans le cas de la figure 3, le dispositif 3 vérifie que le signe distinctif déduit $O\_IM_{CF}$ est réellement obtenu à partir des signes distinctifs $IM_{CF}[i]$ authentifiés, le procédé peut comporter une transmission depuis le support 1 de chaque fois le second signe distinctif $IM_{CF}[i]$ utilisé dans une première combinaison OWHF au premier niveau et, à chaque niveau suivant,

du résultat intermédiaire $V_2$, $V_6$ des fonctions irréversibles OWHF, utilisé pour être combiné successivement au résultat intermédiaire $V_1$, $V_5$ correspondant obtenu à partir du second signe distinctif $IM_{CF}[i]$, jusqu'à l'obtention du signe distinctif déduit $O\_IM_{CF}$.

Pour la mise en oeuvre du procédé de l'invention, il est prévu un système composé au moins du support 1 comportant par exemple au moins un circuit intégré connu du métier, choisi de façon à avoir des moyens de mémorisation des données, des moyens de calcul, pour établir en tout ou en partie le tableau 5 de la figure 2, et des moyens de dialogue direct, "off-line" par rapport à un ordinateur principal d'un organisme financier ou de gestion de paiements par moyens électroniques, avec au moins un dispositif 3 dont le fonctionnement est également décrit ci-dessus.

En vue de son fonctionnement, le dispositif 3 comporte des moyens de dialogue direct pour entrer en correspondance avec le support 1, des moyens de supputation aléatoire ou pseudo-aléatoire, des moyens de calcul des éléments cités ci-dessus, des moyens de comparaison et de vérification de diverses données, selon la description ci-dessus, et des moyens de mémorisation d'au moins le chèque électronique émis par le support 1, si les comparaisons et vérifications prévues déterminent l'authenticité dudit chèque.

Dans une première forme de réalisation du système (figure 1), le support peut être une carte 2 à circuit intégré telle qu'expliquée ci-dessus et le dispositif 3 peut être un terminal 4 qui est apte à lire et à écrire dans la carte 2 et qui peut être connecté, par exemple par réseau téléphonique, à l'ordinateur principal de la banque BB correspondante, à certains moments choisis, en vue d'y transférer les chèques et données afférentes pour en porter les montants authentifiés au crédit d'un compte bancaire du destinataire des chèques, détenteur du dispositif 3.

Dans une autre forme de réalisation (figure 4) du système de l'invention, le support 1 est également une carte 2 à circuit intégré mais le dispositif 3 comprend un terminal 4 à lecture et écriture pour la carte 2 et muni de moyens de transfert de données reçues à des moyens de mémorisation détachables du terminal 4 proprement dit. Ces derniers peuvent être une carte à circuit intégré 6 du même type que la carte 2 et peut être utilisée pour par exemple transporter jusqu'à la banque BB les chèques et données.

Il va de soi que lorsqu'on cite "au moins" un élément ou une étape de procédé, l'homme de métier comprend, après la lecture de l'explication de cet élément ou étape, la ou les manières et possibilités d'application de sa répétition.

Il doit être entendu que l'invention n'est nullement limitée aux formes de réalisation décrites et que bien des modifications peuvent être apportées à ces dernières sans sortir du cadre des revendications.

Ainsi, dans encore une autre forme de réalisation du système de l'invention, si le dispositif 3 est à distance de l'émetteur du paiement et/ou dans le cas d'étapes d'authentification inversée précitée du dispositif 3 par le support 1, ce dernier peut comprendre, d'une part, une carte 2 à circuit intégré précitée et, d'autre part, un élément de communication 7 pour le dialogue entre cette carte 2 et le dispositif 3. Ce peut être le cas pour des paiements "off-line" dans le cadre de réseaux de télécommunication du type INTERNET quand un tiers doit pouvoir faire un paiement à distance afin d'obtenir, ou d'avoir accès à, des services ou informations sans qu'il n'y ait à se référer directement à un organisme financier ou à un organisme de gestion de ce genre de paiements.

La figure 6 montre à titre d'exemple un schéma de communication entre les différents moyens et organismes financiers dans un type de configuration de base du système de l'invention. Une carte 2 est chargée de (formules de) chèques électroniques et de données dans un terminal 8 de la banque émettrice BA correspondante. Ensuite, cette carte 2 est présentée par son détenteur à un commerçant équipé d'un dispositif 3 pour les transactions de paiement. Lorsqu'il le souhaite, le commerçant met son dispositif 3 en liaison avec sa banque BB pour y transférer en particulier des chèques électroniques accumulés. La banque BB soumet au paiement, auprès de la banque BA, des chèques électroniques issus de celle-ci (compensation de comptes, transfert de monnaie).

Lesdites banques BA et BB peuvent être un seul et même organisme.

Un organisme de gestion 9 de paiements électroniques peut faire partie de l'ensemble pour gérer, arbitrer, entretenir le matériel concerné. Une autorité de certification 10, telle qu'une banque nationale doit intervenir selon la loi pour veiller à ce qu'il n'y ait pas de création illicite de valeurs monétaires.

Il apparaît que dans l'invention, selon par exemple le choix du nombre $h$ de signes distinctifs $IM_{CF}[1...h]$ une formule de chèque CF ne peut donner lieu qu'à un chèque électronique ou à plusieurs de ceux-ci, chacun étant différent grâce au signe distinctif $IM_{CF}[1...h]$ qui lui est définitivement associé.

Par exemple aussi, la valeur de base commune $SD_{CF}$ peut être différente à chaque chargement du support 1 et/ou pour chaque formule de chèque CF.

Un support 1 peut recevoir, lors d'un chargement, plusieurs formules de chèque CF et pour chacune une valeur commune $SD_{CF}$.

Dans le tableau 5, les valeurs dites de base S[1],...S[k] sont représentées comme obtenues directement après la fonction irréversible SOWF appliquée à la valeur commune $SD_{CF}$.

Il va de soi que pour toute étape du procédé décrit ci-dessus, l'homme de métier peut choisir et combiner les moyens nécessaires pour mettre en oeuvre le procédé à l'aide du système de l'invention, lesdits moyens lui étant connus.

*Codes et dénominations utilisés*

| | |
|---|---|
| AC_C | code d'authentification pour le dispositif 3 |
| AC_I | code d'authentification pour la banque BA |
| BA | banque émettrice du support 1, organisme financier émetteur de 1 |
| BB | banque du dispositif 3 |
| CA | autorité de certification (voir 10) |
| CDP | paramètres dynamiques de chèque |
| $CERT_B$ | certificat de clé publique signé par l'autorité |
| CF | formule de chèque |
| DES | norme de chiffrement de données, "Data Encryption Standard" |
| $h$ | nombre de signes distinctifs $IM_{CF}[i]$ donnés par l'organisme BA |
| $i$ | indice du signe distinctif $IM_{CF}[1...h]$ utilisé |
| $ID_B$ | identification de la banque BA |
| $ID_C$ | identification de support 1/carte 2 |
| $ID_D$ | identification du dispositif |
| $ID_{CF}$ | identification de formule de chèque |
| $IM_{CF}$ | signe distinctif de chèque |
| $IM_{CF}[1...h]$ | série de $h$ signes distinctifs de chèques |
| $IM_{CF}[i]$ | signe distinctif d'indice $i$ de chèque |
| $j$ | indice des valeurs d'enchaînement Z |
| $k$ | nombre de colonnes du tableau 5 |
| $m$ | ordre de valeurs intermédiaires |
| MAC | (Message Authentication Code), code d'authentification de messages |
| $n$ | nombre de niveaux du tableau 5 |
| $N$ | niveau ou ordre d'une valeur dans une colonne du tableau 5 |
| O_AC_I | valeur d'engagement |
| $O\_IM_{CF}$ | signe distinctif déduit |
| OWF | (One Way Function), fonction irréversible |
| OWHF | (One Way Hash Function), fonction irréversible de compression |
| $PK_B$ | clé publique de BA |
| $PK_{CA}$ | clé publique de l'autorité de certification CA |
| RSA | (Rivest, Shamir et Adleman), algorithme de la RSA Data Security Inc. Redwood City, Californie, USA |
| S[1],...S[k] | valeurs de base associées à un signe distinctif $IM_{CF}[i]$ |
| $SD_{CF}$ | valeur de base commune |
| $SIGN_{CF}$ | signature numérique calculée par BA |
| SK | clé secrète calculée |
| SOWF | (Seed One Way Function), fonction irréversible pour le calcul des valeurs de base |

| | |
|---|---|
| SP$_{CF}$ | paramètres statiques de formules de chèque |
| SVK | clé secrète de vérification de la banque BA |
| Triple DES | (Triple Data Encryption Standard), système de chiffrement de données en appliquant trois fois l'algorithme DES |
| Z | valeurs d'enchaînement |

*Légende des figures*

| | |
|---|---|
| 1 | support |
| 2 | carte de paiement |
| 3 | dispositif |
| 4 | terminal de paiement |
| 5 | tableau de la figure 2 |
| 6 | carte à circuit intégré du dispositif 3 |
| 7 | élément de communication du support 1 |
| 8 | terminal de la banque BA |
| 9 | organisme de gestion de paiement électronique |
| 10 | autorité de certification (CA) |

**Revendications**

1. Procédé de paiement par chèque électronique, notamment dans le cas d'une transaction directe entre uniquement :

   - un émetteur de paiement muni d'un support (1) comportant au moins un chèque électronique en blanc certifié par un organisme financier (BA) et un montant global utilisable au moins partiellement pour le chèque électronique, et
   - un destinataire du paiement muni d'un dispositif (3) adapté pour recevoir au moins un chèque électronique susdit du support (1) précité, le procédé comprenant, pour que le dispositif (3) reconnaisse l'authenticité du support (1) et d'un chèque en cours de réception,

     -- un calcul par le support (1) d'un tableau (5), éventuellement partiel, à partir d'au moins un ensemble de k valeurs de base (S[1], ... S[k]), en appliquant successivement à chacune d'elles n fois une fonction irréversible (OWF) à paramètre(s) différant de préférence à chaque application, l'application successive de la fonction irréversible donnant n fois k valeurs intermédiaires,

     -- un calcul par le support (1) d'une clé secrète (SK) à partir des k dernières valeurs intermédiaires d'ordre n et, à partir de cette clé (SK), un calcul d'un signe distinctif (IM$_{CF}$) du chèque,

     -- une transmission par le support (1) au dispositif (3) du signe distinctif (IM$_{CF}$) calculé du chèque électronique,

     -- un engagement financier du support (1) vis-à-vis du dispositif (3), en ce qui concerne le chèque, en fournissant au dispositif (3)

   - un premier résultat (O_AC_I) d'une fonction irréversible (OWF) par laquelle a été traité le résultat (AC_I) d'un premier algorithme (MAC) combinant une clé secrète (SVK) de vérification, provenant de l'organisme financier (AB) émetteur du chèque électronique, et des paramètres dynamiques (CDP) de ce chèque, et
   - un second résultat (AC_C) d'un second algorithme (MAC) combinant la clé secrète (SK) calculée du support, les paramètres dynamiques (CDP) de ce chèque et le premier résultat (O_AC_I) ci-dessus,

     -- au moins une supputation aléatoire/pseudo-aléatoire, par le dispositif (3), de k nombres m d'applications successives de la fonction irréversible (OWF) aux k valeurs de base (S[1],...S[k]), les k nombres m étant compris entre zéro et n et pouvant être différents les uns des autres, la somme des k nombres m devant être une constante déterminée,

     -- une transmission du résultat de la supputation par le dispositif (3) au support (1),

     -- une réponse du support (1) à ladite supputation du dispositif (3), comprenant d'une part le résultat (AC_I) du premier algorithme combinant la clé secrète de vérification (SVK) et les paramètres dynamiques (CDP) du chèque et, d'autre part, un ensemble des k valeurs intermédiaires obtenues lors des applications successives de la fonction irréversible (OWF) à chacune des k valeurs de base (S[1],...S[k]) le ou les nombres de fois m compris entre zéro et n,

     -- par le dispositif (3) :

   - des applications successives de la fonction irréversible (OWF) à chacune des k valeurs intermédiaires d'ordre(s) m jusqu'à obtenir les k dernières valeurs intermédiaires d'ordre n,
   - un calcul de ladite clé secrète (SK) à partir de ces k dernières valeurs intermédiaires d'ordre n et, à partir de cette clé secrète (SK), un calcul du signe distinctif (IM$_{CF}$) du chèque,
   - une comparaison du signe distinctif (IM$_{CF}$) ainsi calculé et du signe distinctif (IM$_{CF}$) calculé par le support (1) et reçu de celui-ci,
   - une vérification par calcul et comparaison dans le dispositif (3) dudit second résultat (AC_C) du second algorithme (MAC) et de celui reçu du support (1),

- une vérification par calcul et comparaison dans le dispositif (3) dudit premier résultat (O_AC_I) d'une fonction irréversible (OWF) et de celui reçu du support (1) et,

- si lesdites comparaison et vérifications donnent chacune une égalité, une acceptation et une mémorisation par le dispositif (3) du chèque électronique émis par le support (1).

2. Procédé suivant la revendication 1, **caractérisé en ce que** la somme des k nombres m est une constante égale à n*k/2 si le produit n*k est pair ou, si ce produit est impair, à (n*k-1)/2.

3. Procédé suivant l'une ou l'autre des revendications 1 et 2, **caractérisé en ce qu'**il comprend :

- une mémorisation dans le support (1) d'au moins une formule de chèque électronique (CF) utilisable pour réaliser au moins un chèque susdit,

- une transmission par le support (1) au dispositif (3) de :

-- une série de h signes distinctifs ($IM_{CF}[1...h]$) de chèque, associés chacun à un ensemble distinct de k valeurs de base (S[1],...S[k]) contenu dans le support (1),

-- un indice (i), compris entre 1 et h, pour désigner un signe distinctif ($IM_{CF}[i]$) particulier parmi les h signes distinctifs précités,

-- une signature numérique ($SIGN_{CF}$) produite par l'organisme financier émetteur (BA) pour garantir lesdits signes distinctifs ($IM_{CF}[1...h]$), et

- une utilisation par le dispositif (3), pour ladite comparaison, du signe distinctif ($IM_{CF}[i]$) particulier déterminé par l'indice (i) en tant que signe distinctif ($IM_{CF}$) reçu du support (1), et

- une vérification par le dispositif (3) de ladite signature numérique ($SIGN_{CF}$) au moyen d'une clé publique ($PK_B$) que connaît le dispositif (3).

4. Procédé suivant l'une quelconque des revendications 1 à 3, caractérisé

- en ce qu'il comprend, pour la transaction, une transmission par le support (1) au dispositif (3) de données non secrètes qui peuvent être l'identification ($ID_B$) de l'organisme financier (BA) qui certifie le chèque électronique et, le cas échéant, la clé publique ($PK_B$) de l'organisme financier émetteur (BA) et un certificat ($CERT_B$) de cette clé publique ($PK_B$) émis par une autorité de certification (CA), et

- en ce que le dispositif vérifie dans ce cas l'authenticité dudit certificat ($CERT_B$) au moyen d'une autre clé publique ($PK_{CA}$), que le dispositif (3) connaît, de l'autorité de certification (CA).

5. Procédé suivant l'une quelconque des revendications 1 à 4, **caractérisé en ce que** le support (1) peut être rechargé en ce qui concerne son montant global et/ou son nombre (i) de chèques électroniques au cours d'une liaison avec l'organisme financier (BA) précité ou un de ses délégués.

6. Procédé suivant l'une ou l'autre des revendications 1 à 5, **caractérisé en ce qu'**il comporte, pour le calcul du tableau (5) par le support (1), une valeur de base mère commune ($SD_{CF}$) à chaque colonne (1...k) du tableau (5), et une application à cette valeur de base mère d'au moins une fonction irréversible (SOWF) de préférence à paramètre(s) différent(s) pour chaque colonne (1...k).

7. Procédé suivant la revendication 5, **caractérisé en ce qu'**au cours d'un rechargement du support (1), il lui est fourni en outre une identification ($ID_{CF}$) de formules de chèque, des paramètres statiques ($SP_{CF}$) précités mis à jour, une série de h signes distinctifs ($IM_{CF}[1...h]$), une signature numérique ($SIGN_{CF}$) précitée et un nombre déterminé de valeurs de base (S[1],...S[k]) ou, le cas échéant, d'au moins une valeur de base commune ($SD_{CF}$) susdites.

8. Procédé suivant l'une quelconque des revendications 1 à 7, **caractérisé en ce que** le dispositif (3) enregistre en cours de transaction le résultat (AC_I) du premier algorithme et/ou, le cas échéant, une identification ($ID_B$) de l'organisme financier (BA) susdit et/ou une identification ($ID_{CF}$) de la formule du chèque électronique reçu et/ou l'identification ($ID_C$) du support (1).

9. Procédé suivant l'une quelconque des revendications 1 à 8, caractérisé

- en ce que pour des paiements incrémentiels du genre par carte de téléphone, les paramètres dynamiques (CDP) des chèques comportent de plus :

-- le montant ou la suite des montants correspondant aux paiements incrémentiels autorisés,

-- une valeur d'enchaînement de base ($Z_0$),

-- un enchaînement de valeurs successives ($Z_j$) qui découlent chacune successivement de l'application d'une fonction irréver-

sible à la valeur ($Z_{j+1}$) immédiatement suivante, et

- en ce qu'après avoir effectué avec le dispositif (3) ci-dessus un protocole de paiement par chèque électronique, le support (1) peut effectuer un paiement incrémentiel en fournissant au dispositif (3) de réception des valeurs d'enchaînement successives ($Z_1$, $Z_2$, $Z_3$,...), le dispositif (3) conservant un enregistrement de la dernière valeur ($Z_j$) reçue et de l'indice (j) correspondant.

10. Procédé suivant l'une quelconque des revendications 1 à 9, **caractérisé en ce qu'**il comporte une annulation d'une transaction de paiement par chèque du support (1) au dispositif (3).

11. Procédé suivant la revendication 10, **caractérisé en ce qu'**il comporte pour l'annulation précitée,

- une mémorisation, dans le dispositif (3), d'au moins une formule de chèque électronique, émise par l'organisme financier (BB) du dispositif (3), et de données secrètes relatives à cette formule,
- une programmation du support (1) de manière à ce que celui-ci ne puisse recevoir un paiement par chèque que du dispositif (3) auquel une transaction a été payée précédemment au moyen dudit support (1), ce dernier mémorisant le chèque de paiement d'annulation jusqu'à ce que le support (1) soit présenté à son organisme financier (BA) correspondant, notamment pour un rechargement du support (1).

12. Procédé suivant l'une quelconque des revendications 1 à 11, **caractérisé en ce qu'**il comporte de plus des étapes d'authentification inverse par lesquelles le support (1) peut reconnaître de son côté l'authenticité du dispositif (3).

13. Procédé suivant la revendication 12, **caractérisé en ce que** les étapes d'authentification inverse sont du même genre que celles pour l'authentification du support (1), tout en ne nécessitant, le cas échéant, qu'un seul signe distinctif ($IM_{CF}$) de formule de chèque électronique.

14. Procédé suivant l'une ou l'autre des revendications 12 et 13, **caractérisé en ce qu'**il comporte, pour au moins une partie des étapes d'authentification inverse, l'utilisation d'un élément de communication (7) entre le support (1) et le dispositif (3), cet élément de communication (7) étant de préférence détenu par l'émetteur de paiement qui détient ledit support (1).

15. Procédé suivant l'une ou l'autre des revendications 1 à 14, **caractérisé en ce qu'**il comporte, dans le support (1) une combinaison de chacun des divers signes distinctifs ($IM_{CF}[i]$), à un premier niveau, au moyen de fonctions irréversibles (OWHF) avec chaque fois une autre valeur ou un autre signe distinctif ($IM_{CF}[i']$), en ce que les résultats ($V_1$, $V_2$; $V_3$, $V_4$) de chaque fois deux applications dela fonction irréversible (OWHF) sont combinés à un second niveau par une autre application de la fonction irréversible (OWHF) pour donner de nouveaux résultats ($V_5$, $V_6$) à combiner à un troisième niveau par une ou d'autres applications de la fonction irréversible (OWHF) et ainsi de suite jusqu'à obtenir un résultat unique ($O\_IM_{CF}$) qui est signé, comme signe distinctif déduit, par la signature numérique ($SIGN_{CF}$) pour signer les chèques émis.

16. Procédé suivant la revendication 15, **caractérisé en ce qu'**il comporte, pour une vérification par le dispositif (3) du signe distinctif déduit ($O\_IM_{CF}$), une transmission depuis le support (1) de chaque fois le second signe distinctif ($IM_{CF}[i]$) utilisé dans une première combinaison (OWHF) au premier niveau et, à chaque niveau suivant, du résultat intermédiaire ($V_2$, $V_6$) des fonctions irréversibles (OWHF), utilisé pour être combiné successivement au résultat intermédiaire ($V_1$, $V_5$) correspondant obtenu à partir du second signe distinctif ($IM_{CF}[i]$), jusqu'à l'obtention du signe distinctif déduit ($O\_IM_{CF}$).

17. Système de paiement pour la mise en oeuvre du procédé suivant l'une quelconque des revendications 1 à 16, **caractérisé en ce qu'**il comprend

- au moins un support (1) muni

    -- de moyens pour la mémorisation d'au moins

- un chèque électronique en blanc certifié par un organisme financier (BA),
- un montant global utilisable au moins partiellement pour le chèque électronique,
- au moins un signe distinctif ($IM_{CF}$) de ce chèque, qui peut être inclus dans ce dernier,
- au moins un ensemble de k valeurs de base (S[1], ... S[k]) qui peuvent être dérivées d'une seule valeur mère ($SD_{CF}$),
- une clé secrète de vérification (SVK) provenant de l'organisme financier (BA) émetteur du chèque électronique, et
- des paramètres dynamiques (CDP) dudit chèque, et

    -- de moyens de calcul

- d'un tableau (5) à partir des k valeurs de base (S[1],...S[k]), en appliquant successivement à chacune d'elles n fois une fonction irréversible (OWF) à paramètre(s) différant de préférence à chaque application, l'application successive de la fonction irréversible donnant n fois k valeurs intermédiaires,

- d'une clé secrète (SK) à partir des k dernières valeurs intermédiaires d'ordre n et, à partir de cette clé (SK), d'un signe distinctif ($IM_{CF}$) du chèque,
- d'un premier résultat (O_AC_I) d'une fonction irréversible (OWF) par laquelle a été traité le résultat (AC_I) d'un premier algorithme (MAC) combinant la clé secrète (SVK) de vérification et des paramètres dynamiques (CDP) du chèque, et
- d'un second résultat (AC_C) d'un second algorithme (MAC) combinant la clé secrète (SK) calculée du support (1), les paramètres dynamiques (CDP) de ce chèque et le premier résultat (O_AC_I) ci-dessus, et

  -- de moyens de dialogue direct avec au moins un dispositif (3) adapté pour recevoir au moins un chèque électronique susdit du support (1) précité et entre autre le signe distinctif ($IM_{CF}$) dudit chèque,

- le dispositif (3) étant équipé

  -- de moyens de supputation aléatoire/pseudo-aléatoire de k nombres m d'applications successives de la fonction irréversible (OWF) aux k valeurs de base (S[1],... S[k]), les k nombres m étant compris entre zéro et n et pouvant être différents les uns des autres, la somme des k nombres m devant être une constante déterminée,
  -- de moyens de dialogue direct correspondant à ceux du support (1), pour réaliser entre autre une transmission du résultat de la supputation au support (1),
  -- de moyens de calcul

- appliquant successivement la fonction irréversible (OWF) à chacune des k valeurs intermédiaires d'ordre m jusqu'à obtenir les k dernières valeurs intermédiaires d'ordre n,
- de ladite clé secrète (SK) à partir de ces k dernières valeurs intermédiaires d'ordre n et, à partir de cette clé (SK), du signe distinctif ($IM_{CF}$) du chèque,

  -- des moyens de comparaison du signe distinctif ($IM_{CF}$) ainsi calculé et du signe distinctif ($IM_{CF}$) calculé par le support (1) et reçu de celui-ci,
  -- des moyens de vérification par calcul et comparaison dudit second résultat (AC_C) du second algorithme (MAC) et de celui reçu du support (1),

  -- des moyens de vérification par calcul et comparaison dudit premier résultat (O_AC_I) d'une fonction irréversible (OWF) et de celui reçu du support (1) et,
  -- des moyens de mémorisation d'au moins le chèque électronique émis par le support (1), si lesdites comparaison et vérifications donnent chacune une égalité.

18. Système suivant la revendication 17, **caractérisé en ce que** :

- les moyens de mémorisation du support (1) sont agencés pour mémoriser au moins une formule de chèque électronique (CF) utilisable pour réaliser au moins un chèque susdit,
- les moyens de dialogue du support (1) sont agencés pour transmettre au dispositif (3):

  -- une série de h signes distinctifs ($IM_{CF}[1...h]$) de chèque, associés chacun à un ensemble distinct de k valeurs de base (S[1],...S[k]) contenu dans le support (1),
  -- un indice (i), compris entre 1 et h, pour désigner un signe distinctif ($IM_{CF}[i]$) particulier parmi les h signes distinctifs précités,
  -- une signature numérique ($SIGN_{CF}$) produite par l'organisme financier émetteur (BA) pour garantir lesdits signes distinctifs ($IM_{CF}[1...h]$), et

- le dispositif (3) est agencé de façon à utiliser, pour ladite comparaison, le signe distinctif ($IM_{CF}[i]$) particulier déterminé par l'indice (i) en tant que signe distinctif ($IM_{CF}$) reçu du support (1), et
- le dispositif (3) comporte des moyens de calcul agencés pour vérifier ladite signature numérique ($SIGN_{CF}$) au moyen d'une clé publique ($PK_B$) que connaît le dispositif (3).

19. Système suivant la revendication 18, **caractérisé en ce que** :

- les moyens de dialogue du support (1) sont agencés pour transmettre au dispositif (3) des données non secrètes qui peuvent être l'identification ($ID_B$) de l'organisme financier (BA) qui certifie le chèque électronique et, le cas échéant, la clé publique ($PK_B$) de l'organisme financier émetteur (BA) et un certificat ($CERT_B$) de cette clé publique ($PK_B$) émis par une autorité de certification (CA), et
- le dispositif est agencé pour vérifier l'authenticité dudit certificat ($CERT_B$) au moyen d'une autre clé publique ($PK_{CA}$), que le dispositif (3) connaît, de l'autorité de certification (CA).

20. Système suivant l'une quelconque des revendications 17 à 19, **caractérisé en ce qu'**il comporte comme support (1) un carte de paiement (2) du type à circuit intégré et comme dispositif (3) un terminal de paiement (4) à lecture et écriture pour une carte (2) de ce type.

21. Système suivant la revendication 20, **caractérisé en ce qu'**il comporte comme support (1) une carte de paiement (2) du type à circuit intégré et comme dispositif (3) un terminal de paiement (4) à lecture et écriture pour une carte (2) de ce type et muni de moyens de transfert de données reçues de ladite carte (2), et/ou traitées par le terminal (4), dans des moyens de mémorisation (6) détachables du terminal (4) proprement dit et notamment transportables jusqu'à un organisme financier (BB) pour y effectuer un transfert desdites données.

22. Système suivant la revendication 20, **caractérisé en ce que**, notamment au cas où le dispositif (3) est à distance de l'émetteur du paiement et/ou dans le cas d'étapes d'authentification inverse du dispositif (3) par le support (1), le support (1) précité se compose entre autres, d'une part, de la carte (2) à circuit intégré susdite et, d'autre part, d'un élément de communication (7), pour le dialogue entre celle-ci et ledit dispositif (3).

**Claims**

1. Method of payment by electronic cheque, in particular in the case of a direct transaction between solely:

   - a payment issuer furnished with a medium (1) comprising at least one blank electronic cheque certified by a financial institution (BA) and an overall amount useable at least partially in respect of the electronic cheque, and
   - a recipient of the payment furnished with a device (3) adapted to receive at least one aforesaid electronic cheque of the above-mentioned medium (1),
   the method comprising, so that the device (3) can recognize the authenticity of the medium (1) and of a cheque being received,

     - a calculation by the medium (1) of a table (5), possibly partial, on the basis of at least one set of k base values (S[1],...S[k]), by applying successively to each of them n times an irreversible function (OWF) with parameter(s) differing preferably with each application, the successive application of the irreversible function giving k intermediate values n times,
   - a calculation by the medium (1) of a secret key (SK) on the basis of the last k intermediate values of order n and, on the basis of this key (SK), a calculation of a distinctive sign ($IM_{CF}$) of the cheque,
   - a transmission by the medium (1) to the device (3) of the distinctive sign ($IM_{CF}$) calculated for the electronic cheque,
   - a financial commitment of the medium (1) in relation to the device (3), as regards the cheque, by supplying to the device (3),

- a first result (O_AC_I) of an irreversible function (OWF) via which was processed the result (AC_I) of a first algorithm (MAC) combining a secret verification key (SVK), originating from the financial institution (BA) issuing the electronic cheque, and dynamic parameters (CDP) of this cheque, and
- a second result (AC_C) of a second algorithm (MAC) combining the secret key (SK) calculated for the medium, the dynamic parameters (CDP) of this cheque and the first result (O_AC_I) herein above,

   - at least one random/pseudo-random guesstimation, by the device (3), of k numbers m of successive applications of the irreversible function (OWF) to the k base values (S[1],...S[k]), the k numbers m lying between zero and n and possibly being different from one another, the sum of the k numbers m having to be a determined constant,
   - a transmission of the result of the guesstimation by the device (3) to the medium (1),
   - a response by the medium (1) to the said guesstimation by the device (3), comprising on the one hand, the result (AC_I) of the first algorithm combining the secret verification key (SVK) and the dynamic parameters (CDP) of the cheque and, on the other hand, a set of the k intermediate values obtained during the successive applications of the irreversible function (OWF) to each of the k base values (S[1],...S[k]) the number or numbers of times m lying between zero and n,
   - by the device (3):

- successive applications of the irreversible function (OWF) to each of the k intermediate values of order(s) m until the last k intermediate values of order n are obtained,
- a calculation of the said secret key (SK) on the basis of these last k intermediate values of order n and, on the basis of this secret key (SK), a calculation of the distinctive sign ($IM_{CF}$) of the cheque,

- a comparison of the distinctive sign ($IM_{CF}$) thus calculated and of the distinctive sign ($IM_{CF}$) calculated by the medium (1) and received from the latter,
- a verification by calculation and comparison in the device (3) of the said second result (AC_C) of the second algorithm (MAC) and of that received from the medium (1),
- a verification by calculation and comparison in the device (3) of the said first result (O_AC_I) of an irreversible function (OWF) and of that received from the medium (1) and,
- if the said comparison and verifications each give equality, an acceptance and a storage by the device (3) of the electronic cheque issued by the medium (1).

2. Method according to Claim 1, **characterized in that** the sum of the k numbers m is a constant equal to n*k/2 if the product n*k is even or, if this product is odd, to (n*k-1)/2.

3. Method according to one or other of Claims 1 and 2, **characterized in that** it comprises:

   - a storage in the medium (1) of at least one electronic cheque template (CF) useable to make at least one aforesaid cheque,
   - a transmission by the medium (1) to the device (3) of:

     - a series of h distinctive signs ($IM_{CF}$[1...h]) of a cheque, each associated with a distinct set of k base values (S[1],...3[k]) contained in the medium (1),
     - an index (i), lying between 1 and h, for designating a particular distinctive sign ($IM_{CF}$[i]) from among the h aforementioned distinctive signs,
     - a digital signature ($SIGN_{CF}$) produced by the issuing financial institution (BA) so as to guarantee the said distinctive signs ($IM_{CF}$[1...h]), and

   - a use by the device (3), for the said comparison, of the particular distinctive sign ($IM_{CF}$[i]) determined by the index (i) in the guise of distinctive sign ($IM_{CF}$) received from the medium (1), and
   - a verification by the device (3) of the said digital signature ($SIGN_{CF}$) by means of a public key ($PK_B$) known to the device (3).

4. Method according to any one of Claims 1 to 3, characterized

- in that it comprises, in respect of the transaction, a transmission by the medium (1) to the device (3) of non-secret data which may be the identification ($ID_B$) of the financial institution (BA) which certifies the electronic cheque and, as appropriate, the public key ($PK_B$) of the issuing financial institution (BA) and a certificate ($CERT_B$) of this public key ($PK_B$) issued by a certificate authority (CA), and
- in that the device verifies in this case the authenticity of the said certificate ($CERT_B$) by means of another public key ($PK_{CA}$), known to the device (3), of the certificate authority (CA).

5. Method according to any one of Claims 1 to 4, **characterized in that** the medium (1) can be reloaded as regards its overall amount and/or its number (i) of electronic cheques in the course of a link with the above-mentioned financial institution (BA) or one of its delegates.

6. Method according to one or other of Claims 1 to 5, **characterized in that** it comprises, for the calculation of the table (5) by the medium (1), a mother base value ($SD_{CF}$) common to each column (1...k) of the table (5), and an application to this mother base value of at least one irreversible function (SOWF) preferably with different parameter(s) for each column (1...k).

7. Method according to Claim 5, **characterized in that** in the course of a reloading of the medium (1), it is furthermore supplied with an identification ($ID_{CF}$) of cheque templates, updated above-mentioned static parameters ($SP_{CF}$), a series of h distinctive signs ($IM_{CF}$[1...h]), an above-mentioned digital signature ($SIGN_{CF}$) and a determined number of base values (S[1],...3[k]) or, as appropriate, of at least one aforesaid common base value ($SD_{CF}$).

8. Method according to any one of Claims 1 to 7, **characterized in that** the device (3) records, during a transaction, the result (AC_I) of the first algorithm and/or, as appropriate, an identification ($ID_B$) of the aforesaid financial institution (BA) and/or an identification ($ID_{CF}$) of the template of the electronic cheque received and/or the identification ($ID_C$) of the medium (1).

9. Method according to any one of Claims 1 to 8, characterized

- in that in respect of incremental payments of the kind by telephone card, the dynamic parameters (CDP) of the cheques moreover comprise:

  - the amount or the sequence of amounts corresponding to the authorized incremental payments,

- a base chaining value ($Z_0$),
- a chaining of successive values ($Z_j$) which each stem successively from the application of an irreversible function to the immediately following value ($Z_{j+1}$), and

- in that after having performed with the herein above device (3) a protocol for payment by electronic cheque, the medium (1) can perform an incremental payment by supplying the receiving device (3) with successive chaining values ($Z_1$, $Z_2$, $Z_3$, ...), the device (3) preserving a record of the last value ($Z_j$) received and of the corresponding index (j).

10. Method according to any one of Claims 1 to 9, **characterized in that** it comprises a cancellation of a transaction of payment by cheque from the medium (1) to the device (3).

11. Method according to Claim 10, **characterized in that** it comprises in respect of the aforementioned cancellation,

- a storage, in the device (3), of at least one electronic cheque template, issued by the financial institution (BB) of the device (3), and of secret data relating to this template,

- a programming of the medium (1) in such a way that the latter cannot receive a payment by cheque other than from the device (3) to which a transaction was previously paid by means of the said medium (1), the latter storing the cancellation payment cheque until the medium (1) is presented to its corresponding financial institution (BA), in particular for a reloading of the medium (1).

12. Method according to any one of Claims 1 to 11, **characterized in that** it furthermore comprises steps of inverse authentication via which the medium (1) can for its part recognize the authenticity of the device (3).

13. Method according to Claim 12, **characterized in that** the steps of inverse authentication are of the same kind as those for the authentication of the medium (1), whilst requiring, as appropriate, only a single distinctive sign ($IM_{CF}$) of electronic cheque template.

14. Method according to one or other of Claims 12 and 13, **characterized in that** it comprises, for at least some of the inverse authentication steps, the use of an element (7) for communication between the medium (1) and the device (3), this communication element (7) preferably being held by the payment issuer which holds the said medium (1).

15. Method according to one or other of Claims 1 to 14, **characterized in that** it comprises, in the medium (1), a combination of each of the various distinctive signs ($IM_{CF}[i]$), at a first level, by means of irreversible functions (OWHF) each time with another value or another distinctive sign ($IM_{CF}[i']$), in that the results ($V_1$, $V_2$; $V_3$, $V_4$) of each pair of applications of the irreversible function (OWHF) are combined at a second level via another application of the irreversible function (OWHF) so as to give new results ($V_5$, $V_6$) to be combined at a third level via one or other applications of the irreversible function (OWHF) and so on and so forth until a single result ($O\_IM_{CF}$) is obtained, and which is signed, as deduced distinctive sign, by the digital signature ($SIGN_{CF}$) so as to sign the cheques issued.

16. Method according to Claim 15, **characterized in that** it comprises, for a verification by the device (3) of the deduced distinctive sign ($O\_IM_{CF}$), a transmission from the medium (1) each time of the second distinctive sign ($IM_{CF}[i]$) used in a first combination (OWHF) at the first level and, at each succeeding level, of the intermediate result ($V_2$, $V_6$) of the irreversible functions (OWHF), which is used so as to be combined successively with the corresponding intermediate result ($V_1$, $V_5$) obtained on the basis of the second distinctive sign ($IM_{CF}[i]$), until the deduced distinctive sign ($O\text{-}IM_{CF}$) is obtained.

17. Payment system for implementing the method according to any one of Claims 1 to 16, **characterized in that** it comprises

- at least one medium (1) furnished
- with means for storing at least

  - a blank electronic cheque certified by a financial institution (BA),
  - an overall amount useable at least partially in respect of the electronic cheque,
  - at least one distinctive sign ($IM_{CF}$) for this cheque, which may be included in the latter,
  - at least one set of k base values ($S[1]$,...$S[k]$) which may be derived from a single mother value ($SD_{CF}$),
  - a secret verification key (SVK) originating from the financial institution (BA) issuing the electronic cheque, and
  - dynamic parameters (CDP) of the said cheque, and

- with means of calculation

- of a table (5) on the basis of the k base values (S[1],...S[k]), by applying successively to each of them n times an irreversible function (OWF) with parameter(s) differing preferably with each application, the successive application of the irreversible function giving k intermediate values n times,
- of a secret key (SK) on the basis of the last k intermediate values of order n and, on the basis of this key (SK), of a distinctive sign (IM$_{CF}$) of the cheque,
- of a first result (O_AC_I) of an irreversible function (OWF) via which was processed the result (AC_I) of a first algorithm (MAC) combining the secret verification key (SVK) and dynamic parameters (CDP) of the cheque, and
- of a second result (AC_C) of a second algorithm (MAC) combining the secret key (SK) calculated for the medium (1), the dynamic parameters (CDP) of this cheque and the first result (O_AC_I) herein above, and
- with means of direct dialogue with at least one device (3) adapted to receive at least one aforesaid electronic cheque from the above-mentioned medium (1) and among other things the distinctive sign (IM$_{CF}$) of the said cheque,
- the device (3) being equipped
- with means of random/pseudo-random guesstimation of k numbers m of successive applications of the irreversible function (OWF) to the k base values (S[1], ... S[k]), the k numbers m lying between zero and n and possibly being different from one another, the sum of the k numbers m having to be a determined constant,
- with means of direct dialogue corresponding to those of the medium (1), so as among other things to carry out a transmission of the result of the guesstimation to the medium (1),
- with means of calculation

- successively applying the irreversible function (OWF) to each of the k intermediate values of order m until the last k intermediate values of order n are obtained,
- of the said secret key (SK) on the basis of these last k intermediate values of order n and, on the basis of this secret key (SK), a calculation of the distinctive sign (IM$_{CF}$) of the cheque,
- means of comparison of the distinctive sign (IM$_{CF}$) thus calculated and of the distinctive sign (IM$_{CF}$) calculated by the medium (1) and received from the latter,
- means of verification by calculation and comparison of the said second result (AC_C) of the second algorithm (MAC) and of that received from the medium (1),
- means of verification by calculation and comparison of the said first result (O_AC_I) of an irreversible function (OWF) and of that received from the medium (1) and,
- means of storage of at least the electronic cheque issued by the medium (1), if the said comparison and verifications each give equality.

18. System according to Claim 17, **characterized in that**:

- the means of storage of the medium (1) are devised so as to store at least one electronic cheque template (CF) useable to make at least one aforesaid cheque,
- the means of dialogue of the medium (1) are devised so as to transmit to the device (3):

  - a series of h distinctive signs (IM$_{CF}$[1...h]) of a cheque, each associated with a distinct set of k base values (S[1],...S[k]) contained in the medium (1),
  - an index (i), lying between 1 and h, for designating a particular distinctive sign (IM$_{CF}$[i]) from among the h aforementioned distinctive signs,
  - a digital signature (SIGN$_{CF}$) produced by the issuing financial institution (BA) so as to guarantee the said distinctive signs (IM$_{CF}$[1...h]), and

- the device (3) is devised so as to use, for the said comparison, the particular distinctive sign (IM$_{CF}$[i]) determined by the index (i) in the guise of distinctive sign (IM$_{CF}$) received from the medium (1), and
- the device (3) comprises means of calculation devised so as to verify the said digital signature (SIGN$_{CF}$) by means of a public key (PK$_B$) known to the device (3).

19. System according to Claim 18, **characterized in that**:

- the means of dialogue of the medium (1) are devised so as to transmit to the device (3) non-secret data which may be the identification (ID$_B$) of the financial institution (BA) which certifies the electronic cheque and, as appropriate, the public key (PK$_B$) of the issuing financial institution (BA) and a certificate (CERT$_B$) of this public key (PK$_B$) issued by a certificate authority (CA), and
- the device is devised so as to verify the authenticity of the said certificate (CERT$_B$) by means of another public key (PK$_{CA}$), known to the device (3), of the certificate authority (CA).

20. System according to any one of Claims 17 to 19, **characterized in that** it comprises as medium (1) a payment card (2) of the integrated circuit type and as device (3) a payment terminal (4) with reading and writing for a card (2) of this type.

21. System according to Claim 20, **characterized in that** it comprises as medium (1) a payment card (2) of the integrated circuit type and as device (3) a payment terminal (4) with reading and writing for a card (2) of this type and furnished with means of transferring data received from the said card (2), and/or processed by the terminal (4), into storage means (6) detachable from the terminal (4) proper and in particular transportable to a financial institution (BB) so as to perform therein a transfer of the said data.

22. System according to Claim 20, **characterized in that**, in particular in the case where the device (3) is remote from the issuer of the payment and/or in the case of steps of inverse authentication of the device (3) by the medium (1), the above-mentioned medium (1) is composed among other things, on the one hand, of the aforesaid integrated circuit card (2) and, on the other hand, of a communication element (7), for dialogue between the card and the said device (3).

**Patentansprüche**

1. Verfahren zur Zahlung durch elektronischen Scheck, insbesondere im Falle einer direkten Transaktion ausschließlich zwischen:

   - einem Zahlungsgeber, der mit einem Träger (1) ausgestattet ist, der zumindest einen elektronischen Blankoscheck umfaßt, der durch ein Geldinstitut (BA) zertifiziert ist, sowie einen globalen Betrag, der zumindest teilweise für den elektronischen Scheck verwendbar ist, und

   - einem Zahlungsempfänger, der mit einer Vorrichtung (3) ausgestattet ist, die dafür eingerichtet ist, um zumindest einen vorgenannten elektronischen Scheck des genannten Trägers (1) zu empfangen,
   wobei das Verfahren, damit die Vorrichtung (3) die Echtheit des Trägers (1) und eines Schecks während des Empfangs erkennt, umfaßt

     -- eine Berechnung, durch den Träger (1), einer Tabelle (5), eventuell teilweise, ausgehend von zumindest einer Menge von k Basiswerten (S[1], ... S[k]), indem nacheinander auf jeden von ihnen n mal eine irreversible Funktion (OWF) von (einem) Parameter(n) angewendet wird, der (die) vorzugsweise bei jeder Anwendung unterschiedlich ist (sind), wobei die sukzessive Anwendung der irreversiblen Funktion n x k Zwischenwerte ergibt,

   -- eine Berechnung durch den Träger (1) eines geheimen Schlüssels (SK) ausgehend von den k letzten Zwischenwerten der Ordnung n und, ausgehend von diesem Schlüssel (SK), eine Berechnung eines Unterschiedsmerkmals (IM$_{CF}$) des Schecks,

   -- eine Übertragung durch den Träger (1) zu der Vorrichtung (3) des berechneten Unterschiedsmerkmals (IM$_{CF}$) des elektronischen Schecks,

   -- eine finanzielle Verbindung des Trägers (1) gegenüber der Vorrichtung (3), insoweit als der Scheck betroffen ist, indem an die Vorrichtung (3) geliefert wird

 - ein erstes Ergebnis (O_AC_I) einer irreversiblen Funktion (OWF), mit der das Ergebnis (AC_I) eines ersten Algorithmus (MAC) behandelt worden ist, der einen geheimen Verifizierungsschlüssel (SVK), der von dem den elektronischen Scheck ausgebenden Geldinstitut (AB) stammt, und dynamische Parameter (CDP) dieses Schecks kombiniert, und

 - ein zweites Ergebnis (AC_C) eines zweiten Algorithmus (MAC), der den geheimen, von dem Träger berechneten Schlüssel (SK), die dynamischen Parameter (CDP) dieses Schecks und das vorgenannte erste Ergebnis (O_AC_I) kombiniert,

   -- zumindest eine überschlägliche aleatoiische/pseudo-aleatorische Berechnung, durch die Vorrichtung (3), von k Zahlen m von aufeinanderfolgenden Anwendungen der irreversiblen Fundion (OWF) auf die k Basiswerte (S[1], ..., S[k]), wobei die k Zahlen m zwischen 0 und n liegen und sich voneinander unterscheiden können, wobei die Summe der k Zahlen m eine bestimmte Konstante sein muß,

   -- eine Übertragung des Ergebnisses der überschläglichen Berechnung durch die Vorrichtung (3) an den Träger (1),

**20**

-- eine Antwort des Trägers (1) auf die genannte überschlägliche Berechnung der Vorrichtung (3), umfassend einerseits das Ergebnis (AC_I) des ersten Algorithmus, der den geheimen Verifizierungsschlüssel (SVK) und die dynamischen Parameter (CDP) des Schecks kombiniert, und andererseits eine Menge der k Zwischenwerte, die anhand von sukzessiven Anwendungen der irreversiblen Funktion (OWF) auf jeden der k Basiswerte (S[1], ..., S[k]) erhalten worden sind, wobei die Zahl bzw. die Zahlen der Male m zwischen 0 und n liegt (liegen),

-- durch die Vorrichtung (3):

- aufeinanderfolgende Anwendungen der irreversiblen Funktion (OWF) auf jeden der k Zwischenwerte der Ordnungen) m, bis die k letzten Zwischenwerte der Ordnung n erhalten werden,

- eine Berechnung des genannten geheimen Schlüssels (SK) ausgehend von diesen k letzten Zwischenwerten der Ordnung n, und ausgehend von diesem geheimen Schlüssel (SK), eine Berechnung des Unterschiedsmerkmals (IM$_{CF}$) des Schecks,

- einen Vergleich des auf diese Weise berechneten Unterschiedsmerkmals (IM$_{CF}$) und des durch den Träger (1) berechneten und von diesem empfangenen Unterschiedsmerkmals (IM$_{CF}$),

- eine Verifikation durch Berechnung und Vergleich in der Vorrichtung (3) des genannten zweiten Ergebnisses (AC_C) des zweiten Algorithmus (MAC) und desjenigen, das von dem Träger (1) empfangen worden ist,

- eine Verifikation durch Berechnung und Vergleich in der Vorrichtung (3) des ersten genannten Ergebnisses (O_AC_I) einer irreversiblen Funktion (OWF) und desjenigen, das von dem Träger (1) empfangen worden ist, und

- wenn der genannte Vergleich und die Verifikationen jeweils eine Übereinstimmung ergeben, Akzeptierung und Speicherung durch die Vorrichtung (3) des elektronischen Schecks, der von dem Träger (1) ausgesendet worden ist.

2. Verfahren nach Anspruch 1, **dadurch gekennzeichnet, daß** die Summe der k Zahlen m eine Konstante ist, die gleich n*k/2 ist, wenn das Produkt n*k gerade ist, oder gleich (n*k-1)/2 ist, wenn das Produkt ungerade ist.

3. Verfahren nach Anspruch 1 oder 2, **dadurch gekennzeichnet, daß** es umfaßt:

- eine Speicherung in dem Träger (1) von zumindest eines Formulars des elektronischen Schecks (CF), das verwendbar ist, um zumindest einen vorgenannten Scheck zu realisieren,

- eine Übertragung durch den Träger (1) zu der Vorrichtung (3) von:

-- einer Reihe von h Unterschiedsmerkmalen (IM$_{CF}$[1...h]) eines Schecks, die jeweils einer unterschiedlichen Menge von k Basiswerten (S[1], ...S[k]) zugeordnet sind, die in dem Träger (1) enthalten ist,

-- einem Index (i), der zwischen 1 und h liegt, um ein spezielles Unterschiedsmerkmal (IM$_{CF}$[i]) unter den vorgenannten Unterschiedsmerkmalen zu bezeichnen,

-- einer digitalen Unterschrift (SIGN$_{CF}$), die durch das ausgebende Geldinstitut (BA) erzeugt wird, um die Unterschiedsmerkmale (IM$_{CF}$[1...h]) zu garantieren, und

- eine Verwendung, durch die Vorrichtung (3), für den genannten Vergleich, des speziellen, durch den Index (i) bestimmten Unterschiedsmerkmals (IM$_{CF}$[i]) als von dem Träger (1) empfangenes Unterschiedsmerkmal (IM$_{CF}$), und
- eine Verifikation durch die Vorrichtung(3) der genannten digitalen Unterschrift (SIGN$_{CF}$) mittels eines öffentlichen Schlüssels (PK$_B$), den die Vorrichtung(3) kennt.

4. Verfahren nach einem der Ansprüche 1 bis 3, **dadurch gekennzeichnet, daß** das Verfahren für die Transaktion eine Übertragung durch den Träger (1) an die Vorrichtung (3) von nicht geheimen Daten umfaßt, die eine Identifikation (ID$_B$) des Geldinstituts (BA) sein können, das den elektronischen Scheck zertifiziert, und ggf. der öffentliche Schlüssel (PK$_B$) des ausgebenden Geldinstituts (BA) sowie ein Zertifikat (CERT$_B$) dieses öffentlichen Schlüssels (PK$_B$), das von einer Zertifizierungsbehörde (CA) ausgegeben wird, und dadurch, daß die Vorrichtung in diesem Fall die Echtheit des genannten Zertifikats (CERT$_B$) mittels eines weiteren öffentlichen Schlüssels (PK$_{CA}$) der Zertifizierungsbehörde (CA), den die Vorrichtung (3) kennt, verifiziert.

5. Verfahren nach einem der Ansprüche 1 bis 4, **dadurch gekennzeichnet, daß** der Träger (1) aufgefüllt werden kann, soweit sein globaler Betrag und/ oder seine Anzahl (i) von elektronischen Schecks betroffen ist, und zwar im Verlaufe einer Verbindung mit dem vorgenannten Geldinstitut (BA) oder einer seiner Vertreter.

6. Verfahren nach einem der Ansprüche 1 bis 5, **dadurch gekennzeichnet, daß** es für die Berechnung der Tabelle (5) durch den Träger (1) einen für jede Spalte (1...k) der Tabelle (5) gemeinsamen Basisstammwert ($SD_{CF}$) und eine Anwendung auf diesen Basisstammwert von zumindest einer irreversiblen Funktion (SOWF), vorzugsweise mit unterschiedlichem Parameter bzw. unterschiedlichen Parametern für jede Spalte (1 ...k), umfaßt.

7. Verfahren nach Anspruch 5, **dadurch gekennzeichnet, daß** im Laufe einer Auffüllung des Trägers (1) diesem unter anderem eine Identifikation ($ID_{CF}$) von Scheckformularen geliefert wird, genannte aktualisierte statische Parameter ($SP_{CF}$), eine Reihe von h Unterschiedsmerkmalen ($IM_{CF}[1...h]$), eine vorgenannte digitale Unterschrift ($SIGN_{CF}$) und eine bestimmte Anzahl von Basiswerten (S $[1J ...S[k]$), oder ggf. von zumindest einem vorgenannten gemeinsamen Basiswert ($SD_{CF}$).

8. Verfahren nach einem der Ansprüche 1 bis 7, **dadurch gekennzeichnet, daß** die Vorrichtung (3) im Verlaufe der Transaktion das Ergebnis (AC_I) des ersten Algorithmus und/oder, ggf., eine Identifikation ($ID_B$) des vorgenannten Geldinstituts (BA) und/ oder eine Identifikation ($ID_{CF}$) des Formulars des empfangenen elektronischen Schecks und/oder die Identifikation ($ID_C$) des Trägers (1) speichert.

9. Verfahren nach einem der Ansprüche 1 bis 8, **dadurch gekennzeichnet, daß**

   - für inkrementweise bzw. stufenweise Zahlungen der Art, wie sie bei Telefonkarten auftreten, die dynamischen Parameter (CDP) der Schecks zusätzlich umfassen:

     -- den Betrag oder die Folge von Beträgen, die den autorisierten stufenweisen Zahlungen entsprechen,

     -- einen Verkettungs-Basiswert ($Z_0$),

     -- aufeinanderfolgende Verkettungswerte ($Z_j$), die sich jeweils nacheinander aus der Anwendung einer irreversiblen Funktion auf den unmittelbar folgenden Wert ($Z_{j+1}$) ergeben, und

   - nachdem mit der vorgenannten Vorrichtung (3) ein Protokoll der Zahlung mittels elektronischem Scheck erstellt worden ist, der Träger (1) eine stufenweise Zahlung ausführen kann, indem der Empfangsvorrichtung (3) aufeinanderfolgende Verkettungswerte ($Z_1$, $Z_2$, $Z_3$, ...) geliefert werden, wobei die Vorrichtung (3) eine Aufzeichnung des letzten empfangenen Wertes ($Z_j$) und des entsprechenden Index (j) aufbewahrt.

10. Verfahren nach einem der Ansprüche 1 bis 9, **dadurch gekennzeichnet, daß** es eine Aufhebung einer Transaktion einer Zahlung durch Scheck von dem Träger (1) zu der Vornchtung(3) umfaßt.

11. Verfahren nach Anspruch 10, **dadurch gekennzeichnet, daß** es für die vorgenannte Aufhebung umfaßt

   - eine Speicherung, in der Vorrichtung (3), von zumindest einem Formular des elektronischen Schecks, das durch das Geldinstitut (BB) der Vorrichtung (3) ausgesendet wird, und der geheimen Daten, die sich auf dieses Formular beziehen,

   - eine Programmierung des Trägers (1) auf die Weise, daß dieser eine Bezahlung durch Scheck ausschließlich von der Vorrichtung (3) empfangen kann, an die vorher eine Transaktion mittels des genannten Trägers (1) gezahlt worden ist, wobei dieser den Scheck der Zahlungsaufhebung speichert, bis der Träger (1) bei seinem entsprechendem Geldinstitut (BA) präsentiert worden ist, insbesondere für eine Auffüllung des Trägers (1).

12. Verfahren nach einem der Ansprüche 1 bis 11, **dadurch gekennzeichnet, daß** es außerdem Schritte zur inversen Echtheitsüberprüfung aufweist, durch die der Träger (1) seinerseits die Echtheit der Vorrichtung (3) erkennen kann.

13. Verfahren nach Anspruch 12, **dadurch gekennzeichnet, daß** die Schritte der inversen Echtheitsüberprüfung von der gleichen Art sind wie die zur Echtheitsüberprüfung des Trägers (1), wobei ggf. lediglich ein einziges Unterschiedsmerkmal ($IM_{CF}$) des Formulars des elektronischen Schecks benötigt wird.

14. Verfahren nach einem der Ansprüche 12 oder 13, **dadurch gekennzeichnet, daß** es für zumindest einen Teil der Schritte zur inversen Echtheitsüberprüfung die Verwendung eines Kommunikationselements (7) zwischen dem Träger (1) und der Vorrichtung (3) aufweist, wobei dieses Kommunikationselement (7) vorzugsweise im Besitz des Zahlungsgebers ist, der im Besitz des genannten Trägers (1) ist.

15. Verfahren nach einem der Ansprüche 1 bis 14, **dadurch gekennzeichnet, daß** es in dem Träger (1) eine Kombination eines jeden der unterschiedlichen Unterschiedsmerkmale ($IM_{CF}[i]$), in einem ersten Niveau, mittels irreversibler Funktionen (OWHF) mit jedesmal einem anderen Wert oder einem anderen Unterschiedsmerkmal ($IM_{CF}[i']$) aufweist, wobei die Ergebnisse ($V_1$, $V_2$; $V_3$, $V_4$) von jeweils zwei Anwendungen der irreversiblen Funktion (OWHF) in einem zweiten Niveau durch eine weitere Anwendung der irreversiblen Funktion (OWHF) kombiniert werden, um neue Ergebnisse ($V_5$, $V_6$) zu ergeben, die in einem dritten Niveau durch eine oder weitere Anwendungen der irreversiblen Funktion (OWHF) zu kombinieren sind, usw., bis ein einziges Ergebnis ($O\_IM_{CF}$) erhalten wird, das als abgeleitetes Unterschiedsmerkmal durch die digitale Unterschrift ($SIGN_{CF}$) signiert wird, um die ausgegebenen Schecks zu signieren.

16. Verfahren nach Anspruch 15, **dadurch gekennzeichnet, daß** es für eine Verifizierung durch die Vorrichtung (3) des abgeleiteten Unterschiedsmerkmals ($O\_IM_{CF}$) eine Übertragung ausgehend von dem Träger (1) umfaßt, jedesmal wenn das zweite Unterschiedsmerkmal ($IM_{CF}[i]$) in einer ersten Kombination (OWHF) im ersten Niveau verwendet wird, und in jedem folgenden Niveau des Zwischenergebnisses ($V_2$, $V_6$) der irreversiblen Funktionen (OWHF), das verwendet wird, um sukzessive zu dem entsprechenden Zwischenergebnis ($V_1$, $V_5$) kombiniert zu werden, das ausgehend von dem zweiten Unterschiedsmerkmal ($IM_{CF}[i]$) erhalten worden ist, bis zum Erhalt des abgeleiteten Unterschiedsmerkmals ($O\_IM_{CF}$).

17. Zahlungssystem zur Umsetzung des Verfahrens nach einem der Ansprüche 1 bis 16, **dadurch gekennzeichnet, daß** es umfaßt

  - zumindest einen Träger (1), der versehen ist mit

    -- einer Einrichtung zur Speicherung von zumindest

  - einem elektronischen Blankoscheck, der durch ein Geldinstitut (BA) zertifiziert ist,

  - einem globalen Betrag, der zumindest teilweise für den elektronischen Scheck verwendbar ist,

  - zumindest einem Unterschiedsmerkmal ($IM_{CF}$) dieses Schecks, das in diesem enthalten sein kann,

  - zumindest einer Menge von k Basiswerten (S[1], ... S[k]), die von einem einzigen Stammwert ($SD_{CF}$) abgeleitet sein können,

  - einem geheimen Verifizierungsschlüssel (SVK) der von dem den elektronischen Scheck ausgebenden Geldinstitut (BA) stammt, und

  - dynamischen Parametern (CDP) des genannten Schecks, und

    -- einer Einrichtung zur Berechnung

  - einer Tabelle (5) ausgehend von k Basiswerten (S[1], ... S[k]), indem nacheinander auf jeden von ihnen n mal eine irreversible Funktion (OWF) von (einem) Parameter(n) angewendet wird, der (die) vorzugsweise bei jeder Anwendung unterschiedlich ist (sind), wobei die sukzessive Anwendung der irreversiblen Funktion n mal k Zwischenwerte ergibt,

  - eines geheimen Schlüssels (SK) ausgehend von den k letzten Zwischenwerten der Ordnung n und, ausgehend von diesem Schlüssel (SK), eines Unterschiedsmerkmals ($IM_{CF}$) des Schecks,

  - eines ersten Ergebnisses ($I\_AC\_I$) einer irreversiblen Funktion (OWF), mit der das Ergebnis ($AC\_I$) eines ersten Algorithmus (MAC) behandelt worden ist, der den geheimen Verifizierungsschlüssel (SVK) und die dynamischen Parameter (CDP) des Schecks kombiniert, und

  - eines zweiten Ergebnisses ($AC\_C$) eines zweiten Algorithmus (MAC), der den geheimen, von dem Träger (1) berechneten Schlüssel (SK), die dynamischen Parameter (CDP) dieses Schecks und das vorgenannte erste Ergebnis ($O\_AC\_I$) kombiniert, und

    -- einer Einrichtung zum direkten Dialog zwischen zumindest einer Vorrichtung (3), die dafür eingerichtet ist, zumindest einen vorgenannten elektronischen Scheck von dem genannten Träger (1) und unter anderem das Unterschiedsmerkmal ($IM_{CF}$) des genannten Schecks zu empfangen,

    - wobei die Vorrichtung(3) versehen ist mit

    -- einer Einrichtung zur überschläglichen aleatorischen/pseudo-aleatorischen Berechnung von k Zahlen m von sukzessiven Anwendungen der irreversiblen Funktion (OWF) auf die k Basiswerte (S[1], ... S[k]), wobei die k Zahlen m zwischen 0 und n liegen und sich voneinander unterscheiden können, wobei die Summe der k Zahlen m eine bestimmte Konstante sein muß,

-- einer Einrichtung zum direkten Dialog, die der des Trägers (1) entspricht, um unter anderem eine Übertragung des Ergebnisses der überschläglichen Berechnung an den Träger (1) zu realisieren,

-- einer Berechnungseinrichtung

- die sukzessiv die irreversible Funktion (OWF) auf jeden der k Zwischenwerte der Ordnung m anwendet, bis die k letzten Zwischenwerte der Ordnung n erhalten werden,

- des genannten geheimen Schlüssels (SK) ausgehend von diesen k letzten Zwischenwerten der Ordnung n, und ausgehend von diesem Schlüssel (SK), des Unterschiedsmerkmals ($IM_{CF}$) des Schecks,

-- einer Einrichtung zum Vergleich des Unterschiedsmerkmals ($IM_{CF}$), das auf diese Weise berechnet worden ist, und des Unterschiedsmerkmals ($IM_{CF}$), das durch den Träger (1) berechnet und von diesem erhalten worden ist,

-- einer Einrichtung zur Überprüfung durch Berechnung und Vergleich des zweiten Ergebnisses (AC_C) des zweiten Algorithmus (MAC) und desjenigen, daß von dem Träger (1) erhalten worden ist,

-- einer Einrichtung zur Überprüfung durch Berechnung und Vergleich des ersten Ergebnisses (O_AC_I) einer irreversiblen Funktion (OWF) und desjenigen, das von dem Träger (1) erhalten worden ist, und

-- einer Einrichtung zur Speicherung von zumindest dem elektronischen Scheck, der von dem Träger (1) abgeschickt worden ist, wenn der genannte Vergleich und die Überprüfungen jeweils eine Übereinstimmung ergeben.

18. System nach Anspruch 17, **dadurch gekennzeichnet, daß**

- die Einrichtung zur Speicherung des Trägers (1) dafür eingerichtet ist, daß zumindest ein Formular des elektronischen Schecks (CF) gespeichert wird, das verwendbar ist, um zumindest einen genannten Scheck zu realisieren,

- die Dialogeinrichtung des Trägers (1) dafür eingerichtet ist, um an die Vorrichtung (3) zu übertragen:

-- eine Reihe von h Unterschiedsmerkmalen ($IM_{CF}[1 ... h]$) des Schecks, die jeweils einer unterschiedlichen Menge von k Basiswerten ($S[1], ... S[k]$) zugeordnet sind, die in dem Träger (1) enthalten ist,

-- einen Index (i), der zwischen 1 und h liegt, um ein unter den genannten h Unterschiedsmerkmalen befindliches bestimmtes Unterschiedsmerkmal ($IM_{CF}[i]$) zu bezeichnen,

-- eine digitale Unterschrift ($SIGN_{CF}$), die durch das ausgebende Geldinstitut (BA) erzeugt wird, um die genannten Unterschiedsmerkmale ($IM_{CF}[1 ... h]$) zu garantieren, und

- daß die Vorrichtung (3) so eingerichtet ist, daß für den genannten Vergleich das durch den Index (i) bestimmte, spezielle Unterschiedsmerkmal ($IM_{CF}[i]$) als von dem Träger (1) empfangenes Unterschiedsmerkmal ($IM_{CF}$) verwendet wird, und

- die Vorrichtung (3) eine Berechnungseinrichtung umfaßt, die dafür eingerichtet ist, um die genannte digitale Unterschrift ($SIGN_{CF}$) mittels eines öffentlichen Schlüssels ($PK_B$), den die Vorrichtung (3) kennt, zu verifizieren.

19. System nach Anspruch 18, **dadurch gekennzeichnet, daß**

- die Dialogeinrichtung des Trägers (1) dafür eingerichtet ist, um an die Vorrichtung (3) nicht geheime Daten zu übertragen, die eine Identifikation ($ID_B$) des Geldinstituts (BA) sein können, das den elektronischen Scheck zertifiziert, und ggf. der öffentliche Schlüssel ($PK_B$) des ausgebenden Geldinstituts (BA) sowie ein Zertifikat ($CERT_B$) dieses öffentlichen Schlüssels ($PK_B$), das von einer Zertifizierungsbehörde (CA) ausgeben wird, und

- die Vorrichtung dafür eingerichtet ist, um die Echtheit des genannten Zertifikats ($CERT_B$) mittels eines weiteren öffentlichen Schlüssels ($PK_{CA}$) der Zertifizierungsbehörde (CA), den die Vorrichtung (3) kennt, zu verifizieren.

20. System nach einem der Ansprüche 17 bis 19, **dadurch gekennzeichnet, daß** es als Träger (1) eine Zahlungskarte (2) des Typs mit integriertem Schaltkreis und als Vorrichtung (3) ein Zahlungsterminal (4) zum Lesen und Beschreiben einer Karte (2) des genannten Typs aufweist.

21. System nach Anspruch 20, **dadurch gekennzeichnet, daß** es als Träger (1) eine Zahlungskarte (2) des Typs mit integriertem Schaltkreis und als Vorrichtung (3) ein Zahlungsterminal (4) zum Lesen und Beschreiben einer Karte (2) des genannten Typs aufweist, und mit einer Einrichtung zur Übertragung von Daten versehen ist, die von der genannten Karte (2) erhalten worden sind und/oder durch das Terminal (4) verarbeitet worden sind, in einer Einrichtung zur Speicherung (6), die von dem eigentlichen Terminal (4) lösbar ist und insbesondere zu einem Geldinstitut (BB) transportierbar ist, um dort eine Übertragung der genannten Daten vorzunehmen.

22. System nach Anspruch 20, **dadurch gekennzeichnet, daß** insbesondere in dem Fall, daß sich die Vorrichtung (3) in einer Entfernung von dem Zahlungsgeber befindet und/oder in dem Fall von Schritten zur inversen Überprüfung der Vorrichtung (3) durch den Träger (1), sich die vorgenannte Vorrichtung (3) unter anderem einerseits aus der vorgenannten Karte (2) mit integriertem Schaltkreis und andererseits aus einem Kommunikationselement (7) für den Dialog zwischen dieser und der Vorrichtung (3) zusammensetzt.

Fig. 1

Fig. 4

Fig. 5

Fig. 2

Fig. 6

Fig. 3